# EUROPEAN PATENT SPECIFICATION

(11) **EP 4 191 816 B1**
(45) Date of publication and mention of the grant of the patent: **08.10.2025**
(21) Application number: 20949727.0
(22) Date of filing: 17.08.2020
(51) Int. Cl.: H02J 7/02, H02J 7/00, H02M 1/00, H02M 3/07, H02M 3/156, H02M 3/335, H02M 7/06

(54) **CHARGING CIRCUIT, TERMINAL DEVICE, CHARGING SYSTEM AND CHARGING METHOD**
LADESCHALTUNG, ENDGERÄTEVORRICHTUNG, LADESYSTEM UND LADEVERFAHREN
CIRCUIT DE CHARGE, DISPOSITIF TERMINAL, SYSTÈME DE CHARGE ET PROCÉDÉ DE CHARGE

(43) Date of publication of application: 07.06.2023
(73) Proprietor: Huawei Digital Power Technologies Co., Ltd., Shenzhen, Guangdong 518043 (CN)
(72) Inventor: DAI, Shengyong, Shenzhen, Guangdong 518129 (CN); ZHANG, Xue, Shenzhen, Guangdong 518129 (CN); WU, Liang, Shenzhen, Guangdong 518129 (CN)
(74) Representative: Epping - Hermann - Fischer
(86) International application number: PCT/CN2020/109574
(87) International publication number: WO 2022/036514

(56) References cited:
- EP-A1- 3 285 364
- CN-A- 103 501 023
- CN-A- 105 305 558
- CN-A- 106 712 210
- CN-A- 107 706 952
- CN-A- 107 846 053
- US-A1- 2016 246 316
- US-B1- 6 300 744

## Description

### TECHNICAL FIELD

This application relates to the field of charging technologies, and in particular, to a charging circuit, a terminal device, a charging system and method.

### BACKGROUND

An adapter is a common accessory of a terminal device that can store energy. For example, a terminal device such as a smartphone, a tablet computer, and a notebook computer is equipped with an adapter. The adapter may receive an industrial frequency alternating current, convert the industrial frequency alternating current into a direct current, and provide the direct current to the terminal device. Further, the terminal device may charge a terminal battery in the terminal device by using the direct current.

Generally, an electrolytic capacitor needs to be disposed in the terminal adapter, to stabilize an output voltage of the adapter. However, due to a limitation of a process structure of the electrolytic capacitor, most electrolytic capacitors have a large volume, which is not conducive to achieving miniaturization of the adapter. After the electrolytic capacitor is removed, the output voltage of the adapter may fluctuate. That is, the adapter can output only a pulsating direct current.

Although in some current solutions, the adapter may directly charge the terminal battery, and clamp the output voltage of the adapter by using a battery voltage of the terminal battery, so that the output voltage of the adapter is stable near the battery voltage. However, in this solution, the output voltage of the adapter is limited by the battery voltage, and the adapter cannot flexibly adjust the output voltage based on a status of the terminal battery.

Therefore, currently a charging architecture between an adapter having no electrolytic capacitor and a terminal device needs to be further researched.

US 2016/0246316 A1 relates to an electronic device that determines an adapter current limit for a power adapter when the power adapter is connected to the electronic device, said electronic device comprising: a regulator that regulates an adapter output current level at an adapter current limit to prevent said adapter output current level from exceeding said adapter current limit, and that provides a regulation signal indicative thereof; a voltage comparator that provides an under-voltage signal when a low voltage threshold exceeds an adapter output voltage level; and a controller that provides and adjusts said adapter current limit, wherein said controller is operative to: initially set said adapter current limit at a predetermined lowest level; increase said adapter current limit by an incremental amount when said regulation signal is provided; and when said under-voltage signal is provided, decrease said adapter current limit by said incremental amount to determine a final adapter current limit.

### SUMMARY

In view of this, embodiments of this application provide a charging circuit, a terminal device, a charging system and method. When the charging circuit provided in embodiments of this application is integrated into the terminal device, an electrolytic capacitor may be omitted from an adapter that charges the terminal device, which is conducive to achieving miniaturization of the adapter. The invention is set out in the appended claims.

According to a first aspect, an embodiment of this application provides a charging circuit. The charging circuit includes a conversion circuit and a controller. A first transmission end of the conversion circuit is configured to connect to a charging interface of a terminal device, the charging interface is configured to receive a first direct current output by an adapter, and a second transmission end of the conversion circuit is configured to connect to a terminal battery. In this embodiment of this application, when a voltage of the charging interface is greater than or equal to a threshold voltage, the conversion circuit is configured to transmit the first direct current to the terminal battery from the charging interface, and the controller is configured to modulate a voltage of the first direct current to a charging voltage to charge the terminal battery; and when a voltage of the charging interface is less than a threshold voltage, the conversion circuit is configured to transmit a second direct current from the terminal battery to the charging interface, and the controller is configured to control the conversion circuit to modulate a voltage of the second direct current to a first voltage, where the first voltage is greater than or equal to a lowest operating voltage of the adapter.

In this embodiment of this application, the adapter may be an adapter having an electrolytic capacitor, or may be an adapter having no electrolytic capacitor. When the adapter is the adapter having no electrolytic capacitor, the first direct current output by the adapter is a pulsating direct current, that is, the voltage of the first direct current fluctuates periodically. The lowest operating voltage of the adapter may be understood as a minimum value of an output voltage of the adapter when the adapter can continuously charge the terminal device. In other words, when the output voltage of the adapter (that is, the voltage of the first direct current output by the adapter) is lower than the lowest operating voltage, the adapter stops charging the terminal device.

Because the first direct current is the pulsating direct current, an instantaneous voltage of the first direct current at some time points may be low, and a protection mechanism in the adapter is triggered, so that the adapter stops charging the terminal device. In this embodiment of this application, when the voltage of the charging interface is less than the threshold voltage, it indicates that the voltage of the first direct current is low. The charging circuit may be discharged by using the terminal battery, and apply the first voltage to the charging interface, to stabilize the voltage of the charging interface at the first voltage, where the first voltage is greater than or equal to the lowest operating voltage of the adapter.

In addition, because when the adapter charges the terminal device, a voltage of an output interface of the adapter is equivalent to the voltage of the charging interface of the terminal device, and because the charging circuit may always maintain the voltage of the charging interface above the lowest operating voltage of the adapter, the voltage of the output interface of the adapter may be clamped at a high voltage. In this way, the protection mechanism in the adapter is prevented from being triggered, so that the adapter can continuously charge the terminal device. For example, the threshold voltage in this embodiment of this application may be greater than the first voltage, to ensure that the adapter can continuously charge the terminal device.

For example, the conversion circuit in this embodiment of this application may include one or more direct current-direct current conversion circuits. For example, the conversion circuit includes at least one of the following circuits: a linear voltage regulator power supply circuit, a buck buck conversion circuit, a boost boost conversion circuit, a buck-boost buck-boost conversion circuit, a three-level buck buck conversion circuit, a switched-capacitor conversion circuit, an inductor-inductor-capacitor LLC resonant conversion circuit, a dual active full-bridge direct current-direct current DAB conversion circuit, a forward conversion circuit, a flyback conversion circuit, a half-bridge push-pull circuit, a full-bridge push-pull circuit, and a full-bridge phase-shift conversion circuit.

It should be noted that, in this embodiment of this application, the controller may control a direct current transmission direction of the conversion circuit in an opened-loop manner, or may control a direct current transmission direction of the conversion circuit in a closed-loop manner. Details are as follows.

### 1. Open-loop control

The open-loop control may be applied to some direct current-direct current conversion circuits, such as a switched-capacitor conversion circuit. Specifically, when the voltage of the charging interface is less than the threshold voltage, the conversion circuit may switch the direct current transmission direction to a direction from the terminal battery to the charging interface. When the voltage of the charging interface is greater than the threshold voltage, the conversion circuit may switch the direct current transmission direction to a direction from the charging interface to the terminal battery.

For the open-loop control mode, the controller does not need to control the direct current transmission direction of the conversion circuit, so that control logic of the controller for the conversion circuit is simpler.

### 2. Closed-loop control

In closed-loop control, the charging circuit needs to detect the voltage of the charging interface, to determine a time at which the direct current transmission direction of the conversion circuit is switched. To enable the charging circuit to detect the voltage of the charging interface, the charging circuit in this embodiment of this application may further include a detection circuit. One end of the detection circuit is configured to connect to the charging interface, and the other end of the detection circuit is connected to the controller. The detection circuit may detect the voltage of the charging interface. When the voltage of the charging interface increases from being less than the threshold voltage to being greater than or equal to the threshold voltage, the detection circuit may send a first indication signal to the controller; or when the voltage of the charging interface decreases from being greater than or equal to the threshold voltage to being less than the threshold voltage, the detection circuit may send a second indication signal to the controller. In this case, after receiving the first indication signal, the controller may control the conversion circuit to modulate the voltage of the first direct current to the charging voltage to charge the terminal battery, or after receiving the second indication signal, the controller may further control the conversion circuit to modulate the voltage of the second direct current to the first voltage.

It may be understood that, because the voltage of the first direct current output by the adapter is generally periodic pulsating voltage, the voltage of the charging interface also changes periodically. Therefore, the controller may also periodically control, based on a voltage change period of the charging interface, the conversion circuit to switch the direct current transmission direction. In this implementation, the detection circuit can be omitted, and a structure of the charging circuit is simplified.

According to a second aspect, an example of this application, which is not encompassed by the wording of the claims, further provides a charging circuit. The charging circuit mainly includes a conversion circuit and a controller. A first transmission end of the conversion circuit is configured to connect to a charging interface of a terminal device, the charging interface is configured to receive a first direct current output by an adapter, and a second transmission end of the conversion circuit is configured to connect to a terminal battery. The conversion circuit may transmit the first direct current to the terminal battery from the charging interface. The controller may control the conversion circuit to modulate a voltage of the first direct current to a charging voltage to charge the terminal battery, and when a voltage of the charging interface decreases from being greater than or equal to a threshold voltage to being less than the threshold voltage, control the conversion circuit to decrease a charging current provided to the terminal battery, to maintain the voltage of the charging interface to be greater than or equal to a lowest operating voltage of the adapter.

Specifically, in a case in which an output current of the adapter remains unchanged, when a power of the first direct current output by the adapter decreases, an output voltage of the adapter also decreases, so that the voltage of the charging interface decreases accordingly. In this example of this application, when the voltage of the charging interface is less than the threshold voltage, the controller controls the conversion circuit to decrease the charging current provided to the terminal battery, that is, an output current of the conversion circuit. As a result, the output current of the adapter is decreased. In addition, because of a conversion relationship between a voltage, a current, and a power, that is, a product of the voltage and the current is equal to the power, the output current of the adapter is decreased, so that when an output power of the adapter is decreased, the output voltage of the adapter can be maintained to be not excessively decreased, thereby avoiding triggering a protection mechanism in the adapter, and enabling the adapter to continuously charge the terminal device.

In this example of this application, the threshold voltage may be greater than the lowest operating voltage of the adapter, to avoid that the adapter stops charging the terminal device because the output voltage of the adapter is excessively low.

For example, the charging circuit may further include a detection circuit. One end of the detection circuit is connected to the first transmission end, and the other end of the detection circuit is connected to the controller. The detection circuit may detect the voltage of the charging interface. When the voltage of the charging interface decreases from being greater than or equal to the threshold voltage to being less than the threshold voltage, the detection circuit may send a third indication signal to the controller. After receiving the third indication signal, the controller may further control the conversion circuit to decrease the charging current provided to the terminal battery.

In a possible implementation, the charging circuit may further increase the charging current provided to the terminal battery after the voltage of the charging interface increases from being less than the threshold voltage to being greater than or equal to the threshold voltage. For example, when the voltage of the charging interface increases from being less than the threshold voltage to being greater than or equal to the threshold voltage, the detection circuit may further send a fourth indication signal to the controller. After receiving the fourth indication signal, the controller may further control the conversion circuit to increase the charging current provided to the terminal battery.

Specifically, after the voltage of the charging interface increases from being less than the threshold voltage to being greater than or equal to the threshold voltage, it indicates that the power of the first direct current is large. In this case, the charging current provided to the terminal battery may be increased, and a voltage value of the first direct current may be appropriately decreased, to improve conversion efficiency of the conversion circuit.

In this example of this application, the conversion circuit may include one or more direct current-direct current conversion circuits. For example, the converter circuit may include one or more of the following circuits: a linear voltage regulator power supply circuit, a buck conversion circuit, a boost conversion circuit, a buck-boost conversion circuit, a three-level buck conversion circuit, a switched-capacitor conversion circuit, an LLC resonant conversion circuit, a DAB conversion circuit, a forward conversion circuit, a flyback conversion circuit, a half-bridge push-pull circuit, a full-bridge push-pull circuit, a full-bridge phase-shift conversion circuit, and the like. Details are not listed in this example of this application.

According to a third aspect, an embodiment of this application provides a terminal device. The terminal device includes a charging interface, a charging circuit, and a terminal battery, the charging circuit is separately connected to the charging interface and the terminal battery, and the charging circuit may be the charging circuit provided in any one of the first aspect. For a technical effect of a corresponding solution in the third aspect, refer to a technical effect that can be obtained in the corresponding solution in the first aspect. Repeated parts are not described in detail.

For example, in the terminal device provided in this embodiment of this application, the charging interface is configured to receive a first direct current output by the adapter. When a voltage of the charging interface is greater than or equal to a threshold voltage, the charging circuit is configured to transmit the first direct current to the terminal battery from the charging interface, and to modulate a voltage of the first direct current to a charging voltage to charge the terminal battery; and when a voltage of the charging interface is less than a threshold voltage, the charging circuit is configured to transmit a second direct current from the terminal battery to the charging interface, and to modulate a voltage of the second direct current to a first voltage, where the first voltage is greater than or equal to a lowest operating voltage of the adapter. In this embodiment of this application, the threshold voltage may be greater than the first voltage, to ensure that the adapter can continuously work.

For example, the charging circuit may include a conversion circuit and a controller, a first transmission end of the conversion circuit is configured to connect to the charging interface of the terminal device, and a second transmission end of the conversion circuit is configured to connect to the terminal battery. When the voltage of the charging interface is greater than or equal to the threshold voltage, the conversion circuit may transmit the first direct current to the terminal battery from the charging interface, and the controller may control the conversion circuit to modulate the voltage of the first direct current to the charging voltage; and when the voltage of the charging interface is less than the threshold voltage, the conversion circuit may transmit the second direct current from the terminal battery to the charging interface, and the controller may control the conversion circuit to modulate the voltage of the second direct current to the first voltage.

To enable the charging circuit to detect the voltage of the charging interface, in a possible implementation, the charging circuit may further include a detection circuit. One end of the detection circuit is configured to connect to the charging interface, and the other end of the detection circuit is connected to the controller. The detection circuit may detect the voltage of the charging interface. When the voltage of the charging interface increases from being less than the threshold voltage to being greater than or equal to the threshold voltage, the detection circuit may send a first indication signal to the controller; or when the voltage of the charging interface decreases from being greater than or equal to the threshold voltage to being less than the threshold voltage, the detection circuit may send a second indication signal to the controller. In this case, after receiving the first indication signal, the controller may control the conversion circuit to modulate the voltage of the first direct current to the charging voltage; or after receiving the second indication signal, the controller may control the conversion circuit to modulate the voltage of the second direct current to the first voltage.

In this embodiment of this application, the conversion circuit is a direct current-direct current conversion circuit. For example, the conversion circuit may include at least one of the following circuits: a linear voltage regulator power supply circuit, a buck buck conversion circuit, a boost boost conversion circuit, a buck-boost buck-boost conversion circuit, a three-level buck buck conversion circuit, a switched-capacitor conversion circuit, an inductor-inductor-capacitor LLC resonant conversion circuit, a dual active full-bridge direct current-direct current DAB conversion circuit, a forward conversion circuit, a flyback conversion circuit, a half-bridge push-pull circuit, a full-bridge push-pull circuit, and a full-bridge phase-shift conversion circuit.

According to a fourth aspect, an example of this application, which is not encompassed by the wording of the claims, provides a terminal device. The terminal device mainly includes a charging interface, a charging circuit, and a terminal battery. The charging circuit is separately connected to the charging interface and the terminal battery. The charging interface may be the charging circuit provided in any one of the second aspect. For a technical effect of a corresponding solution in the fourth aspect, refer to a technical effect that can be obtained in the corresponding solution in the second aspect. Repeated parts are not described in detail.

For example, the charging interface may receive a first direct current output by an adapter. The charging circuit may transmit the first direct current to the terminal battery from the charging interface, and modulate a voltage of the first direct current to a charging voltage to charge the terminal battery. When a voltage of the charging interface decreases from being greater than or equal to a threshold voltage to being less than the threshold voltage, the charging circuit may decrease a charging current provided to the terminal battery, to maintain the voltage of the charging interface to be greater than or equal to a lowest operating voltage of the adapter. Generally, the threshold voltage may be greater than the lowest operating voltage of the adapter.

For example, the charging circuit may include a conversion circuit and a controller, a first transmission end of the conversion circuit is configured to connect to the charging interface of the terminal device, and a second transmission end of the conversion circuit is configured to connect to the terminal battery. The conversion circuit may transmit the first direct current to the terminal battery from the charging interface. The controller may control the conversion circuit to modulate the voltage of the first direct current to the charging voltage, and when the voltage of the charging interface is less than the threshold voltage, control the conversion circuit to decrease the charging circuit.

To enable the charging circuit to detect the voltage of the charging interface, in a possible implementation, the charging circuit may further include a detection circuit. One end of the detection circuit is configured to connect to the first transmission end, and the other end of the detection circuit is connected to the controller. The detection circuit may detect the voltage of the charging interface. When the voltage of the charging interface decreases from being greater than or equal to the threshold voltage to being less than the threshold voltage, the detection circuit may send a third indication signal to the controller. After receiving the third indication signal, the controller may further control the conversion circuit to decrease the charging current.

In a possible implementation, when the voltage of the charging interface increases from being less than the threshold voltage to being greater than or equal to the threshold voltage, the detection circuit may further send a fourth indication signal to the controller. After receiving the fourth indication signal, the controller may further control the conversion circuit to increase the charging current provided to the terminal battery.

In this example of this application, the conversion circuit is a direct current-direct current conversion circuit. For example, the conversion circuit may include at least one of the following circuits: a linear voltage regulator power supply circuit, a buck buck conversion circuit, a boost boost conversion circuit, a buck-boost buck-boost conversion circuit, a three-level buck buck conversion circuit, a switched-capacitor conversion circuit, an inductor-inductor-capacitor LLC resonant conversion circuit, a dual active full-bridge direct current-direct current DAB conversion circuit, a forward conversion circuit, a flyback conversion circuit, a half-bridge push-pull circuit, a full-bridge push-pull circuit, and a full-bridge phase-shift conversion circuit.

According to a fifth aspect, an example of this application, which is not encompassed by the wording of the claims, further provides an adapter. The adapter is adapted to the terminal device provided in any one of the third aspect or the fourth aspect. The adapter mainly includes an alternating current interface, a first rectifier circuit, a direct current-direct current converter, and an output interface. An input end of the first rectifier circuit is connected to the alternating current interface, an output end of the first rectifier circuit is connected to an input end of the direct current-direct current converter, and an output end of the direct current-direct current converter is connected to the output interface. In the adapter, the alternating current interface may receive an alternating current. The first rectifier circuit may convert the alternating current into a first direct current, and then output the first direct current to the direct current-direct current converter. The direct current-direct current converter may modulate a voltage of the first direct current, and then output the first direct current through the output interface.

The first rectifier circuit may be a non-controlled rectifier circuit or a PFC circuit. The adapter may be an adapter having an electrolytic capacitor, or may be an adapter having no electrolytic capacitor. When the adapter has no electrolytic capacitor, the first direct current output by the adapter is a pulsating direct current. When the adapter has no electrolytic capacitor, it is conducive to achieving miniaturization of the adapter.

According to a sixth aspect, an embodiment of this application further provides a charging system. The charging system mainly includes the terminal device according to the third aspect and the adapter according to the fifth aspect. An output interface of the adapter is coupled to a charging interface of the terminal device. The adapter may charge the terminal device.

According to a seventh aspect, an embodiment of this application further provides a charging method. The charging method is applied to the charging circuit provided in any one of the first aspect, the charging circuit is separately connected to a charging interface of a terminal device and a terminal battery, and the charging interface may receive a first direct current output by an adapter. For a technical effect of a corresponding solution in the seventh aspect, refer to a technical effect that can be obtained in the corresponding solution in the first aspect. Repeated parts are not described in detail.

The charging method provided in this embodiment of this application includes: when a voltage of the charging interface is greater than or equal to a threshold voltage, transmitting the first direct current to the terminal battery from the charging interface, and modulating a voltage of the first direct current to a charging voltage to charge the terminal battery; and when a voltage of the charging interface is less than a threshold voltage, transmitting a second direct current from the terminal battery to the charging interface, and modulating a voltage of the second direct current to a first voltage, where the first voltage is greater than or equal to a lowest operating voltage of the adapter. Generally, the threshold voltage may be greater than the first voltage.

According to an eighth aspect, an example of this application, which is not encompassed by the wording of the claims, further provides a charging method. The charging method is applied to the charging circuit provided in any one of the second aspect, the charging circuit is separately connected to a charging interface of a terminal device and a terminal battery, and the charging interface may receive a first direct current output by an adapter. For a technical effect of a corresponding solution in the eighth aspect, refer to a technical effect that can be obtained in the corresponding solution in the second aspect. Repeated parts are not described in detail.

For example, the charging method provided in this example of this application mainly includes:
transmitting the first direct current to the terminal battery from the charging interface, and modulating a voltage of the first direct current to a charging voltage to charge the terminal battery, and when a voltage of the charging interface decreases from being greater than or equal to a threshold voltage to being less than the threshold voltage, decreasing a charging current provided to the terminal battery, to maintain the voltage of the charging interface to be greater than or equal to a lowest operating voltage of the adapter. Generally, the threshold voltage may be greater than the lowest operating voltage of the adapter.

These aspects or other aspects of this application are more readily apparent from the following description of embodiments.

### BRIEF DESCRIPTION OF DRAWINGS

FIG. 1 is a schematic diagram of an architecture of a charging system;
FIG. 2 is a schematic diagram of a structure of an adapter having an electrolytic capacitor;
FIG. 3a is a schematic diagram of a voltage of a direct current output by an industrial frequency rectifier power supply;
FIG. 3b is a schematic diagram of voltage fluctuation of an electrolytic capacitor;
FIG. 4 is a schematic diagram of a structure of an adapter having no electrolytic capacitor;
FIG. 5 is a schematic diagram of an output voltage and an output current of an adapter having no electrolytic capacitor;
FIG. 6 is a schematic diagram of a direct charging architecture;
FIG. 7 is a schematic diagram of a fast charging architecture according to an embodiment of this application;
FIG. 8 is a schematic diagram of a structure of a terminal device according to an embodiment of this application;
FIG. 9 is a schematic diagram of a structure of a terminal device according to an embodiment of this application;
FIG. 10 is a schematic diagram of a structure of a terminal device according to an example of this application, which is not encompassed by the wording of the claims;
FIG. 11 is a schematic diagram of a structure of an adapter according to an example of this application;
FIG. 12 is a schematic flowchart of a charging method according to an embodiment of this application; and
FIG. 13 is a schematic flowchart of a charging method according to an of this application, which is not encompassed by the wording of the claims.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

The following clearly and completely describes the technical solutions in embodiments of this application with reference to the accompanying drawings in embodiments of this application.

In a current terminal consumer market, most terminal devices have a feature of energy storage. Especially, for a mobile terminal device, such as a smartphone, a tablet computer, or a notebook computer, energy storage becomes one of basic functions of the mobile terminal device. An energy storage function of the terminal device generally depends on a terminal battery inside the terminal device, and the terminal battery is a battery (which may also be referred to as a secondary battery). The terminal battery may supply power to the terminal device when the terminal device works, or may store electric energy when the terminal device is charged.

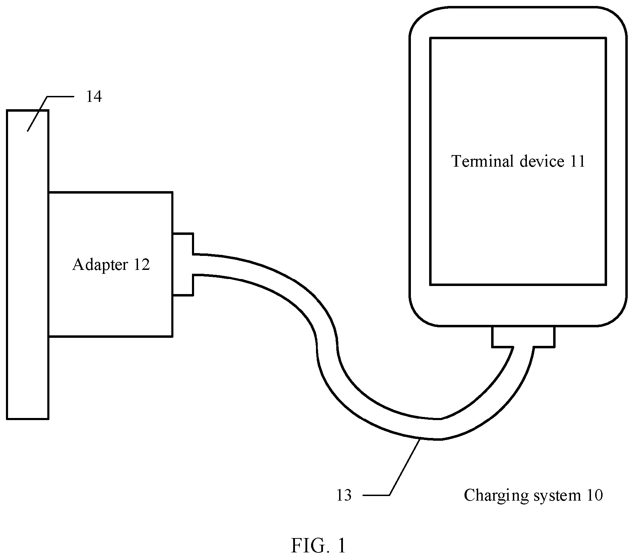

Generally, the terminal device is provided with an adapter, and the adapter may charge the terminal device. As shown in FIG. 1, a charging system 10 mainly includes a terminal device 11 and an adapter 12. During charging, a user may connect the adapter 12 to an industrial frequency power supply 14, and couple the adapter 12 to the terminal device 11 by using a data cable 13.

The industrial frequency power supply 14 is usually a household socket, a power strip, and the like, and may output an alternating current. The adapter 12 may convert the alternating current output by the industrial frequency power supply 14 into a direct current, and then input the direct current to the terminal device 11 by using the data cable 13. The terminal device 11 may further charge the terminal battery inside the terminal device 11 by using the received direct current.

The following further describes the adapter 12 by using an example.

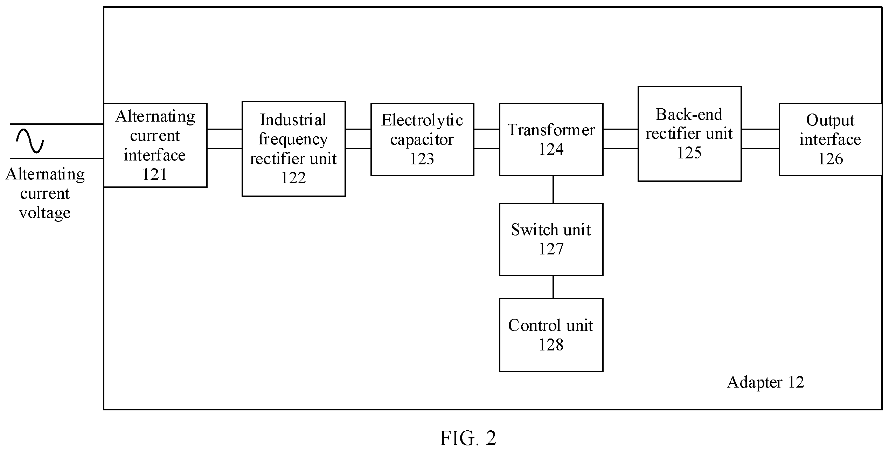

FIG. 2 is an example of a schematic diagram of a structure of the adapter 12. As shown in FIG. 2, the adapter 12 mainly includes an alternating current interface 121, an industrial frequency rectifier unit 122, an electrolytic capacitor 123, a transformer 124, a back-end rectifier unit 125, an output interface 126, a switch unit 127, and a control unit 128. The alternating current interface 121, the industrial frequency rectifier unit 122, the electrolytic capacitor 123, the transformer 124, the back-end rectifier unit 125, and the output interface 126 are sequentially connected, and the switch unit 127 is separately connected to the transformer 124 and the control unit 128.

When the adapter 12 works, the industrial frequency rectifier unit 122 may convert an alternating current received by the alternating current interface 121 into a direct current, and provide the direct current to the electrolytic capacitor 123. The industrial frequency rectifier unit 122 may include an alternating current-direct current conversion circuit, to implement rectification. It may be understood that the industrial frequency rectifier unit 122 can convert only the alternating current into the direct current, and generally does not have a function of regulating the direct current. Therefore, the direct current obtained by the industrial frequency rectifier unit 122 is a pulsating direct current, that is, a voltage of the direct current is a pulsating direct current voltage, and a voltage fluctuates periodically.

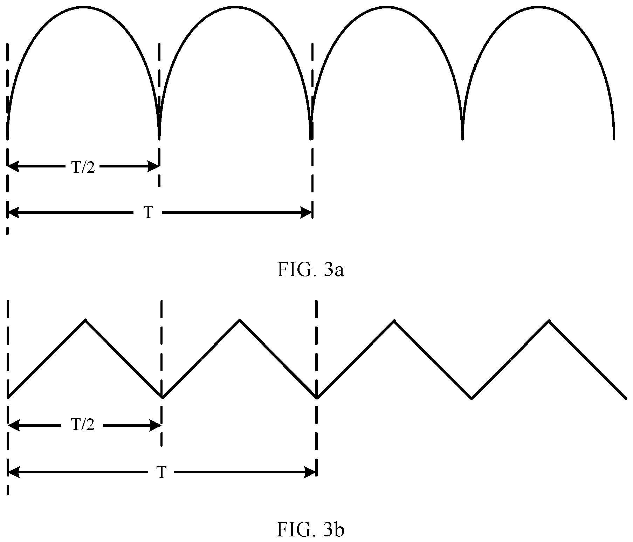

A sine alternating current is used as an example. A voltage of the direct current obtained after rectification by the industrial frequency rectifier unit 122 may be shown in FIG. 3a. The voltage of the direct current output by the industrial frequency rectifier unit 122 does not alternate between positive and negative, but the voltage fluctuates periodically. A pulsating period of the voltage of the pulsating direct current output by the industrial frequency rectifier power supply 122 is T/2, and T is an alternating current period of a sine alternating current received by the alternating current interface 121.

The electrolytic capacitor 123 may regulate the voltage of the pulsating direct current provided by the industrial frequency rectifier unit 122, to provide a stable direct current to the transformer 124. For example, as shown in FIG. 3b, because the voltage of the direct current output by the industrial frequency rectifier unit 122 is the pulsating direct current voltage, a capacitor voltage of the electrolytic capacitor 123 also fluctuates periodically.

Specifically, if a stable direct current needs to be provided to the transformer 124, it needs to be ensured that a power of the direct current provided to the transformer 124 is stable. However, for the pulsating direct current output by the industrial frequency rectifier unit 122, a power of the pulsating direct current also pulsates. In other words, although an average output power of the industrial frequency rectifier unit 122 can match an input power required by the transformer 124, an instantaneous output power of the industrial frequency rectifier unit 122 does not match an instantaneous input power required by the transformer 124.

In view of this, the electrolytic capacitor 123 may be disposed between the industrial frequency rectifier unit 122 and the transformer 124. When the instantaneous output power of the industrial frequency rectifier unit 122 is greater than the instantaneous input power required by the transformer 124, the electrolytic capacitor 123 may store redundant electric energy to stabilize an input power of the transformer 124. Therefore, the capacitor voltage of the electrolytic capacitor 123 increases. When the instantaneous output power of the industrial frequency rectifier unit 122 is less than the instantaneous input power required by the transformer 124, the electrolytic capacitor 123 may release stored electric energy to stabilize the input power of the transformer 124. Therefore, the capacitor voltage of the electrolytic capacitor 123 decreases.

In other words, the electrolytic capacitor 123 is disposed between the industrial frequency rectifier unit 122 and the transformer 124, so that an output power of the industrial frequency rectifier unit 122 and the input power of the transformer 124 can be decoupled. In addition, because the output power of the industrial frequency rectifier unit 122 depends on the input power of the adapter 12, and the input power of the transformer 124 determines an output power of the adapter 12. Therefore, the electrolytic capacitor 123 is disposed to decouple the input power and the output power of the adapter 12, that is, the instantaneous output power of the adapter 12 may be unequal to the instantaneous input power of the adapter 12. The adapter 12 may maintain a stable output power, and the adapter 12 may maintain a stable output voltage without considering a change of an output current.

The control unit 128 may control the switch unit 127 to be periodically turned on and off, so that the transformer 124 completes voltage conversion. Generally, the switch unit 127 may be a power switch tube, and the control unit 128 may be a logic circuit having a logical operation capability, or may be a controller. The control unit 128 may generally control, by using the switch unit 127, the transformer 124, and modulate the voltage of the direct current provided by the electrolytic capacitor 123. This process may also be referred to as voltage conversion.

Generally, a voltage of the alternating current provided by most industrial frequency power supplies 14 is excessively high, and consequently, the voltage of the direct current provided by the electrolytic capacitor 123 is also high, and cannot be directly provided to the terminal device 11. The control unit 128 may control the transformer 124 to modulate the voltage of the direct current provided by the electrolytic capacitor 123 to a lower voltage of an alternating current by controlling the switch unit 127 to be turned on and off. The back-end rectifier unit 125 may convert the alternating current output by the transformer 124 into a direct current, and may further output the direct current through the output interface 126. The transformer 124 cooperates with the back-end rectifier unit 125 to implement voltage reduction, so that the voltage of the direct current output by the adapter 12 can adapt to the terminal device 11.

It can be learned from the foregoing example that, in the adapter 12 shown in FIG. 2, because there is the electrolytic capacitor 123, the adapter 12 can output a stable direct current. It should be notedthat ,"a stable direct current" means that a pulsating range of the power of the direct current is small, and the pulsating of the power of the direct current does not affect charging of the adapter 12 and the terminal device 11.

In addition, for the stable direct current, a power, a voltage, and a current of the stable direct current may also be changed under control of the control unit 128. For example, the control unit 128 may flexibly adjust control logic of the switch unit 127 based on a charging status of the terminal device 11, to adjust the output voltage, the output current, and/or the output power of the adapter 12.

Although the adapter 12 in FIG. 2 can provide the stable direct current to the terminal device 11, due to a limitation of a process structure of the electrolytic capacitor 123, the electrolytic capacitor 123 usually has a large volume, which is not conducive to miniaturization of the adapter 12, and is uneasy to be carried by the user, and affects user experience. When the user has a higher requirement for charging convenience, it is expected to become one of mainstream development directions of a future adapter by removing the electrolytic capacitor 123 from the adapter 12 to implement a miniaturized adapter 12.

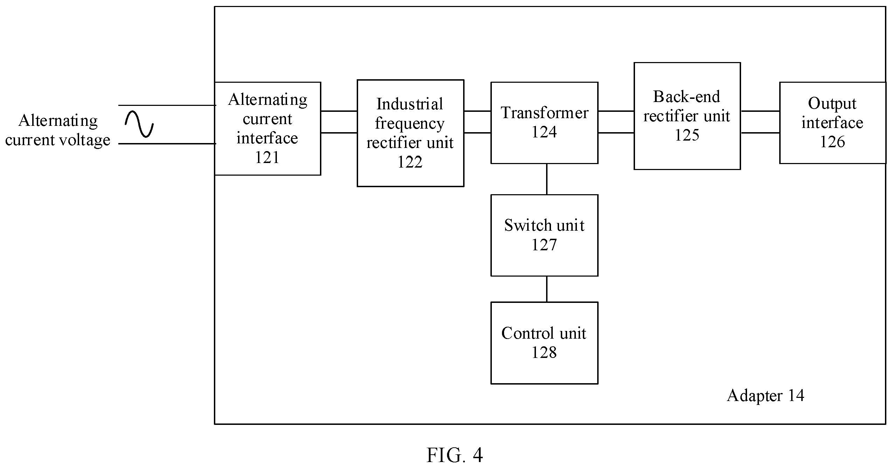

As shown in FIG. 4, an adapter 14 mainly includes an alternating current interface 121, an industrial frequency rectifier unit 122, a transformer 124, a back-end rectifier unit 125, an output interface 126, a switch unit 127, and a control unit 128. The foregoing components and corresponding components in the adapter 12 have similar functions, and details are not described herein again.

In a possible implementation, the adapter 14 may further include an electromagnetic interference (electromagnetic interference, EMI) filter. One end of the EMI filter is connected to the alternating current interface 121, and the other end is connected to the industrial frequency rectifier unit 122, so that high-frequency noise in the alternating current can be preliminarily filtered out.

It can be learned by comparing the adapter 14 with the adapter 12 that the adapter 14 does not include an electrolytic capacitor 123, so that a volume of the adapter 14 is reduced, costs are reduced, and power density is increased. In addition, the adapter 14 does not include the electrolytic capacitor 123, so that a safety problem caused by electrolyte leakage of the electrolytic capacitor and a service life bottleneck problem of the electrolytic capacitor can be avoided.

However, as described above, the electrolytic capacitor 123 in the adapter 12 enables the adapter 12 to output the stable direct current. After the electrolytic capacitor 123 is removed, the adapter 14 cannot output the stable direct current. A direct current output by the adapter 14 is changed to a pulsating direct current, that is, a power of the direct current output by the adapter 14 fluctuates.

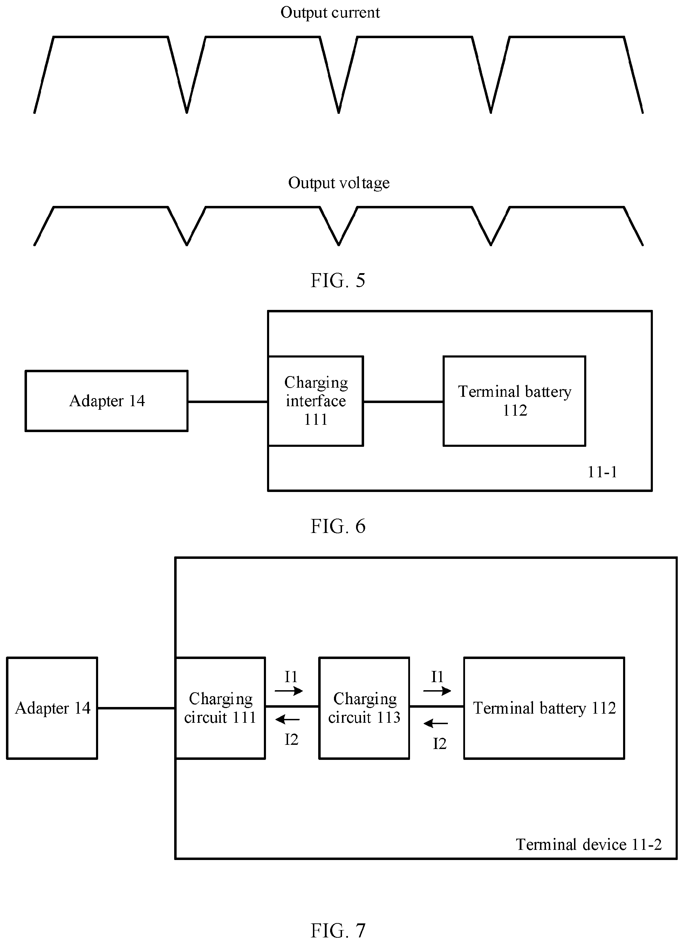

For example, as shown in FIG. 5, without considering impact of the terminal device 11, after the electrolytic capacitor 123 in the adapter 14 is removed, an output voltage of the adapter 14 is a pulsating direct current voltage, that is, a voltage of the direct current output by the adapter 14 fluctuates periodically. An output current of the adapter 14 is a pulsating direct current, that is, a current of the direct current output by the adapter 14 fluctuates periodically.

After the electrolytic capacitor 123 is removed from the adapter 14, it is possible that the adapter 14 cannot continuously charge the terminal device 11. For example, a protection mechanism is usually disposed in the adapter 14, and the control unit 128 may monitor, by detecting a voltage of the output interface 126, whether the adapter 14 works normally. Generally, when the voltage of the output interface 126 is low, the protection mechanism may be triggered, and the control unit 128 controls the transformer 124 to stop working, so that the adapter 14 stops working.

Because the adapter 14 may output the pulsating direct current, the voltage of the output interface 126 (that is, the output voltage of the adapter 14) fluctuates periodically. When the voltage of the output interface 126 fluctuates to a low voltage, the protection mechanism in the adapter 14 may be triggered by mistake, so that the adapter 14 stops working.

In addition, the adapter 14 is further provided with a plurality of functional chips, such as a charging protocol chip. A direct current output by the output interface 126 may further supply power to the charging protocol chip. When the voltage of the output interface 126 is low, the charging protocol chip may stop working, so that the adapter 14 stops working.

In conclusion, after the electrolytic capacitor 123 in the adapter 14 is removed, although a volume of the adapter 14 is reduced, a problem that the adapter 14 cannot continuously charge the terminal device 11 is caused. In view of this, how to enable the adapter 14 having no electrolytic capacitor to continuously charge the terminal device 11 becomes one of problems to be resolved.

For the problem, in a direct charging architecture, a function of replacing the electrolytic capacitor 123 with a terminal battery may be used, so that the adapter 14 can continuously charge the terminal device 11. For example, as shown in FIG. 6, a terminal device 11-1 includes a charging interface 111 and a terminal battery 112. The charging interface 111 is configured to connect to the adapter 14, and receive the pulsating direct current provided by the adapter 14. The charging interface 111 is connected to the terminal battery 112, and may provide the received pulsating direct current to the terminal battery 112, to charge the terminal battery 112.

In the terminal device 11-1 shown in FIG. 6, the terminal battery 112 is directly connected to the adapter 14 by using the charging interface 111. In other words, the direct current output by the adapter 14 may directly charge the terminal battery 112. Therefore, the charging architecture may also be referred to as "direct charging".

In the direct charging architecture, the terminal battery 112 may clamp the output voltage of the adapter 14, and function as the electrolytic capacitor 123. Specifically, in the direct charging architecture, the voltage of the output interface 126 of the adapter 14 is equivalent to a battery voltage of the terminal battery 112. When the output voltage of the adapter 14 is low, the terminal battery 112 may discharge for a short time, so that the voltage of the output interface 126 of the adapter 14 is maintained near the battery voltage. Therefore, in the direct charging architecture shown in FIG. 6, the terminal device 11-1 can prevent the voltage of the output interface 126 from being excessively low, to avoid triggering the protection mechanism of the adapter 14, so that the adapter 14 can continuously charge the terminal device 11-1.

However, because the output voltage of the adapter 14 is clamped by the terminal battery 112, flexible configuration of the adapter 14 is also limited. For example, if an output power of the adapter 14 needs to be further increased, when the output voltage of the adapter 14 remains unchanged, the output power of the adapter 14 can be increased only by increasing the output current of the adapter 14. However, an excessively high output current imposes a high requirement on an overcurrent capability of a structure or a component such as the output interface 126, a data line 13, and the charging interface 111.

If an output power is increased by increasing the output voltage of the adapter 14, the battery voltage is generally increased by connecting a battery electric core in series, to increase the output voltage of the adapter 14. In this implementation, a volume of the terminal battery 112 is increased, which is not conducive to improving energy density of the terminal battery 112. In addition, if the battery voltage of the terminal battery 112 is excessively high, when the terminal battery 112 supplies power to the terminal device 11-1, utilization of electric energy in the terminal battery 112 by the terminal device 11-1 is also reduced.

In view of this, an embodiment of this application provides a terminal device. The terminal device not only includes a charging interface and a terminal battery, but also includes a charging circuit between the charging interface and the terminal battery. The charging circuit is disposed, the output voltage of the adapter may be clamped, and the charging interface may be decoupled from the terminal battery, which is not only conducive to achieving miniaturization of the adapter, but also conducive to flexible configuration of the adapter.

FIG. 7 is an example of a schematic diagram of a structure of the terminal device according to an embodiment of this application. As shown in FIG. 7, a terminal device 11-2 includes a charging interface 111, a terminal battery 112, and a charging circuit 113. The charging circuit 113 is separately connected to the charging interface 111 and the terminal battery 112. The terminal battery 112 may be a battery, such as a nickel-cadmium battery, a nickel-hydrogen battery, or a lithium-ion battery.

Next, the charging interface 111 and the charging circuit 113 are separately further described.

### 1. Charging interface 111

In this embodiment of this application, the charging interface 111 may be an interface that complies with a charging protocol in the terminal device 11-2, for example, a universal serial bus (universal serial bus, USB) interface or a type-C (Type-C) interface. When charging the terminal device 11-2, the charging interface 111 may be directly connected to the adapter 14, or may be connected to the adapter 14 by using a data cable, so that the charging interface 111 may receive a first direct current I1 provided by the adapter 14 or the adapter 12.

It should be noted that the terminal device 11-2 provided in this embodiment of this application may support charging of the adapter 12 having the electrolytic capacitor 123, and may also support charging of the adapter 14 having no electrolytic capacitor 123. In other words, the first direct current I1 received by the charging interface 111 may be a stable direct current, or may be a pulsating direct current, and the terminal device 11-2 may complete charging by using the first direct current I1 received by the charging interface 111.

For ease of understanding, in this embodiment of this application, an example in which the adapter 14 charges the terminal device 11-2 and the first direct current I1 is the pulsating direct current is used for description. When the first direct current I1 is the stable direct current, refer to a conventional stable direct current charging process, and details are not described herein again.

### 2. Charging circuit 113

In this embodiment of this application, the charging circuit 113 modulates a voltage of the first direct current I1 output by the adapter 14 to a charging voltage that adapts to the terminal battery 112, to charge the terminal battery 112. In other words, the output voltage of the adapter 14 is no longer limited by clamping of the battery voltage of the terminal battery 112, so that decoupling between the output voltage of the adapter 14 and the battery voltage of the terminal battery 112 is implemented. In this case, the adapter 14 can increase the output power by increasing the output voltage, to further improve a charging speed. Therefore, a charging system shown in FIG. 7 in this embodiment of this application may also be referred to as a "fast charging" system.

In addition, the charging circuit 113 may further clamp the output voltage of the adapter 14, so that the adapter 14 can continuously charge the terminal device 11-2. Specifically, inan implementation according to the invention, the charging circuit 113 has a bidirectional power transmission function. In this case, the charging circuit 113 is configured to discharge by using the terminal battery 112, and to apply a stable first voltage V1 to the charging interface 111. In another possible implementation, which is not encompassed by the wording of the claims, the charging circuit 113 may have a unidirectional transmission function. In this case, the charging circuit 113 may adjust the output current of the adapter 14 by adjusting the charging current provided to the terminal battery 112, so that when an instantaneous power of the first direct current I1 output by the adapter 14 is small, the output voltage of the adapter 14 may remain at a large value.

The following further describes the foregoing two implementations separately by using examples.

### Implementation 1 according to the claimed invention: bidirectional transmission

For the charging circuit 113 of bidirectional transmission, the charging circuit 113 is configured to transmit a direct current from the charging interface 111 to the terminal battery 112, and to also transmit a direct current from the terminal battery 112 to the charging interface 111. In this embodiment of this application, when a voltage of the charging interface 111 is greater than or equal to a threshold voltage V0, the charging circuit 113 is configured to modulate a voltage of the first direct current I1 received by the charging interface 111, to modulate the voltage of the first direct current I1 to a charging voltage, to charge the terminal battery 112.

Specifically, when the terminal battery 112 is charged, the charging voltage output by the charging circuit 113 should meet a charging requirement of the terminal battery 112, and the charging voltage is generally a voltage within a specific range. Specifically, the charging voltage output by the charging circuit 113 needs to be greater than the battery voltage of the terminal battery 112, to implement charging. The charging voltage cannot be excessively high, to prevent the terminal battery 112 from being overheated, thereby affecting a life of the terminal battery 112.

In this embodiment of this application, the adapter 14 may have a large average output voltage, to improve a charging speed. When the voltage of the charging interface 111 is greater than or equal to the threshold voltage V0, it indicates that a current output voltage of the adapter 14 is large, and the adapter 14 does not stop working. In this case, the charging circuit 113 is configured to modulate the voltage of the received first direct current I1, so that the modulated voltage of the first direct current I1 can adapt to the terminal battery 112, thereby charging the terminal battery 112.

The charging circuit 113 is configured to further transmit a second direct current I2 from the terminal battery 112 to the charging interface 111 when the voltage of the charging interface 111 is less than the threshold voltage V0. The second direct current I2 is a direct current output by the terminal battery 112. The charging circuit 113 is configured to modulate a voltage of the second direct current I2, and to modulate the voltage of the second direct current I2 to a first voltage V1, where the first voltage V1 is greater than or equal to a lowest operating voltage of the adapter 14.

In this embodiment of this application, the lowest operating voltage of the adapter 14 may be understood as a minimum value of an output voltage of the adapter 14 when the adapter 14 can continuously charge the terminal device 11-2. In other words, when the output voltage of the adapter 14 is lower than the lowest operating voltage, the adapter 14 stops charging the terminal device 11-2.

As described above, because the first direct current I1 is the pulsating direct current, an instantaneous voltage of the first direct current I1 at some time points may be low, so that the adapter 14 stops charging the terminal device 11-2. In this embodiment of this application, when the voltage of the charging interface 111 is less than the threshold voltage V0, it indicates that the voltage of the first direct current I1 is low. In this case, the charging circuit 113 is configured to discharge by using the terminal battery 112, and stabilize the voltage of the charging interface 111 at the first voltage V1, where the first voltage V1 is greater than or equal to the lowest operating voltage of the adapter 14.

It can be learned from FIG. 7 that the voltage of the output interface 126 of the adapter 14 is equivalent to the voltage of the charging interface 111 of the terminal device 11-2. Because the charging circuit 113 always maintains the voltage of the charging interface 111 above the lowest operating voltage of the adapter 14, the voltage of the output interface 126 of the adapter 14 may be clamped at a high voltage. In this way, the protection mechanism in the adapter 14 is prevented from being triggered, so that the adapter 14 can continuously charge the terminal device 11-2. For example, the threshold voltage V0 in this embodiment of this application may be greater than the first voltage V1, to ensure that the adapter 14 can continuously charge the terminal device 11-2.

It should be noted that when the charging circuit 113 applies the first voltage V1 to the charging interface 111, electric energy is transmitted by the terminal device 11-2 to the adapter 14. In this embodiment of this application, "the adapter 14 may continuously charge the terminal device 11-2" is described from a perspective of a complete charging process. In other words, although the terminal battery 112 may be temporarily discharged at some time points in the charging process, overall, power stored in the terminal battery 112 continuously increases.

It may be understood that the charging circuit 113 in this embodiment of this application has a plurality of possible implementations. For example, the charging circuit 113 may include a first transmission path and a second transmission path. The first transmission path may be used to transmit the first direct current I1 to the terminal battery 112 from the charging interface 111, and the second transmission path may be used to transmit the second direct current to the charging interface 111 from the terminal battery 112. The charging circuit 113 may separately connect or disconnect the first transmission path and the second transmission path based on a relative value relationship between the voltage of the charging interface 111 and the threshold voltage V0.

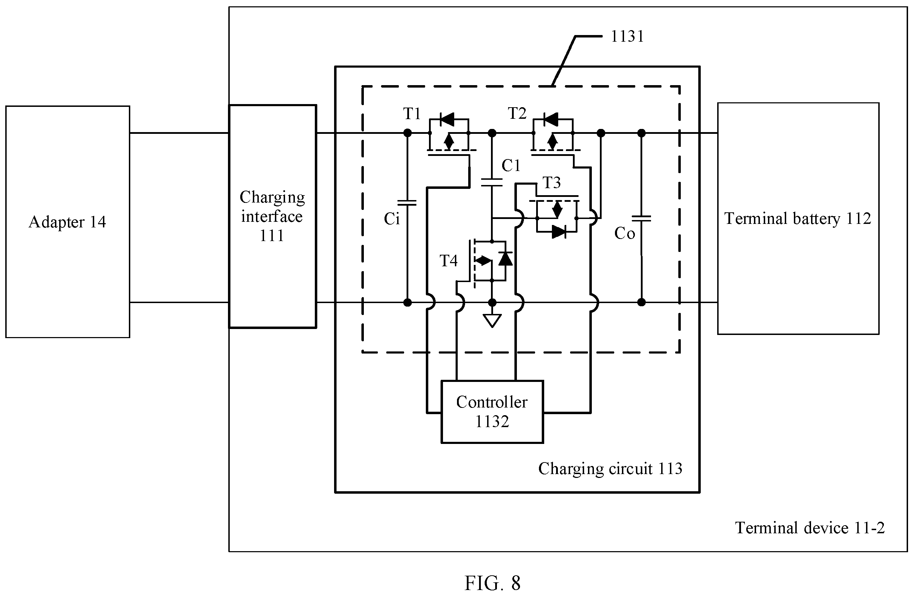

In another possible implementation, as shown in FIG. 8, the charging circuit 113 may include a conversion circuit 1131 and a controller 1132. A first transmission end of the conversion circuit 1131 is configured to connect to the charging interface 111 of the terminal device 11-2, and a second transmission end of the conversion circuit 1131 is configured to connect to the terminal battery 112. In this embodiment of this application, the conversion circuit 1131 and the controller 1132 may be used as two discrete elements to implement the charging circuit 113 through electrical connection. Alternatively, the conversion circuit 1131 and the controller 1132 may be integrated into a same chip, to implement the charging circuit 113. This is not limited in this embodiment of this application.

The conversion circuit 1131 may transmit the first direct current to the terminal battery 112 from the charging interface 111, or may transmit the second direct current to the charging interface 111 from the terminal battery 112. When transmitting the first direct current and the second direct current, the conversion circuit 1131 may further modulate voltages of the first direct current and the second direct current under control of the controller 1132.

In this embodiment of this application, the conversion circuit 1131 may include one or more direct current-to-direct current conversion circuits connected in series or in parallel. For example, the conversion circuit 1131 may include but is not limited to one or more of the following circuits: a linear voltage regulator power supply circuit, a buck (Buck) conversion circuit, a boost (Boost) conversion circuit, a buck-boost (Buck-Boost) conversion circuit, a three-level buck (Buck) conversion circuit, a switched-capacitor conversion circuit, an inductor-inductor-capacitor (LLC) resonant conversion circuit, a dual active full-bridge direct current-direct current (dual active bridge, DAB) conversion circuit, a forward conversion circuit, a flyback conversion circuit, a half-bridge push-pull circuit, a full-bridge push-pull circuit, a full-bridge phase-shift conversion circuit, and the like. Details are not listed in this embodiment of this application.

The controller 1132 is connected to a control end of the conversion circuit 1131, and may control the conversion circuit 1131 to perform voltage modulation (conversion). Generally, the conversion circuit 1131 includes one or more switching transistors, and a control end of the conversion circuit 1131 may include control electrodes (gates) of these switching transistors. The controller 1132 may be a logic circuit having a logic operation capability, can generate a control signal, and separately control, based on the control signal, each of the switch transistors in the conversion circuit 1131 to be turned on or off, to control the conversion circuit 1131 to implement voltage conversion.

In this embodiment of this application, when the voltage of the charging interface 111 is greater than or equal to the threshold voltage V0, the controller 1132 may control the conversion circuit 1131 to modulate the voltage of the first direct current I1 to the charging voltage, to charge the terminal battery 112. When the voltage of the charging interface 111 is less than the threshold voltage V0, the conversion circuit 1131 is controlled to modulate the voltage of the second direct current I2 to the first voltage V1.

In the first implementation, the controller 1132 may control the conversion circuit 1131 to switch a direct current transmission direction in an opened-loop manner, that is, the conversion circuit 1131 automatically switches the direct current transmission direction. The controller 1132 may alternatively control the conversion circuit 1131 to switch a direct current transmission direction in a closed-loop manner, that is, the conversion circuit 1131 switches the direct current transmission direction under control of the controller 1132. The following separately describes the cases.

### 1. Control the conversion circuit 1131 in the opened-loop manner

The open-loop control may be applied to some direct current-direct current conversion circuits, such as a switched-capacitor conversion circuit. Specifically, when the voltage of the charging interface 111 is less than the threshold voltage V0, the conversion circuit 1131 may switch the direct current transmission direction to a direction from the terminal battery 112 to the charging interface 111. When the voltage of the charging interface 111 is greater than the threshold voltage V0, the conversion circuit 1131 may switch the direct current transmission direction to a direction from the charging interface 111 to the terminal battery 112.

Generally, the threshold voltage V0 may be N times a current battery voltage of the terminal battery 112, where N is a voltage conversion ratio of the conversion circuit 1131.

For example, it is assumed that a current voltage conversion ratio of the conversion circuit 1131 is 2:1, that is, the conversion circuit 1131 may modulate the voltage of the first direct current I1 from V to V/2. The threshold voltage is twice the battery voltage. For example, if the battery voltage is 3 V, the threshold voltage is 6 V When the voltage of the charging interface 111 is lower than 6 V, the voltage of the first direct current I1 modulated by the conversion circuit 1131 is lower than 3 V, and cannot meet a charging requirement of the terminal battery 112. Therefore, the terminal battery 112 stops charging and starts discharging. The terminal battery 112 outputs the second direct current, so that the conversion circuit 1131 automatically switches the direct current transmission direction to a direction from the terminal battery 112 to the charging interface 111.

It should be understood that, in a charging process of the terminal battery 112, both the battery voltage of the terminal battery 112 and the voltage conversion ratio of the conversion circuit 1131 may dynamically change. Therefore, for the conversion circuit 1131 applicable to the open-loop control, the threshold voltage V0 may also dynamically change. For the conversion circuit 1131 applicable to the open-loop control, the controller 1132 does not need to change a control signal provided to the conversion circuit 1131 due to the change of the direct current transmission direction, and control logic of the controller 1132 is simpler.

The following further describes the charging circuit 113 by using an example in which the converter circuit 1131 is a switched-capacitor converter circuit. As shown in FIG. 8, the conversion circuit 1131 mainly includes a switching transistor T1, a switching transistor T2, a switching transistor T3, a switching transistor T4, and a capacitor C1. A first electrode of the switching transistor T1 is connected to the first transmission end, a second electrode of the switching transistor T1 is separately connected to a first electrode of the switching transistor T2 and one end of the capacitor C1, and a second electrode of the switching transistor T2 is separately connected to the second transmission end and a first electrode of the switching transistor T3. A second electrode of the switching transistor T3 is separately connected to the other end of the capacitor C1 and a first electrode of the switching transistor T4. A second electrode of the switching transistor T4 is connected to an equipotential point (a zero potential point) in the charging circuit 113. Control electrodes of the switching transistors T1, T2, T3, and T4 are all connected to the controller 1132. Generally, the conversion circuit 1131 may further include an input capacitor Ci and an output capacitor Co, to filter an input voltage and an output voltage of the conversion circuit 1131 respectively.

In a charging process, the controller 1132 may periodically control the switching transistors T1, T2, T3, and T4. The switching transistors T1 and T4 are synchronously turned on and off, the switching transistors T2 and T3 are synchronously turned on and off, and the switching transistors T1 and T2 are alternately turned on and off. In this embodiment of this application, control of the switching transistors T1, T2, T3, and T4 by the controller 1132 is not affected by the direct current transmission direction in the conversion circuit 1131.

### 2. Control the conversion circuit 1131 in the closed-loop manner

The open-loop control may be applied to some direct current-direct current conversion circuits, such as a buck conversion circuit, a boost conversion circuit, and a buck-boost conversion circuit. That is, these direct current-direct current conversion circuits each cannot automatically switch a direct current transmission direction, and the controller 1132 may control each of these direct current-direct current conversion circuits to change the direct current transmission direction.

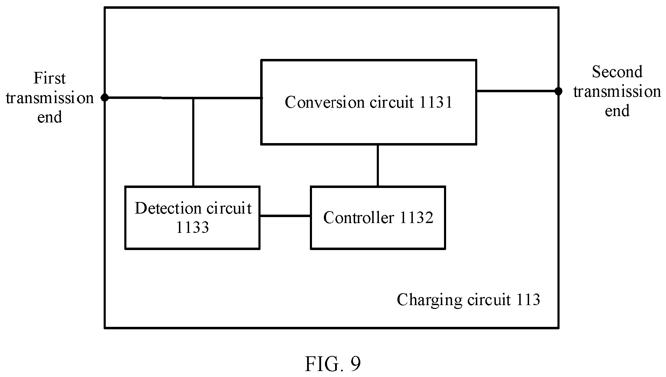

In this case, the controller 1132 needs to be capable of detecting a voltage status of the charging interface 111, to control the direct current transmission direction of the conversion circuit 1131. In view of this, as shown in FIG. 9, the charging circuit 113 provided in this embodiment of this application may further include a detection circuit 1133. One end of the detection circuit 1133 is connected to the first transmission end of the conversion circuit 1131, and the other end of the detection circuit 1133 is connected to the controller 1132. The detection circuit 1133 may detect the voltage of the charging interface 111.

When the voltage of the charging interface 111 increases from being less than the threshold voltage V0 to being greater than or equal to the threshold voltage V0, the charging interface 111 may further send a first indication signal to the controller 1132. In this case, after the controller 1132 receives the first instruction signal, it means that the voltage of the charging interface 111 is in a state greater than or equal to the threshold voltage V0. The controller 1132 may control the conversion circuit 1131 to transmit the first direct current I1 to the terminal battery 112 from the charging interface 111. In addition, the controller 1132 may further control the conversion circuit 1131 to modulate the voltage of the first direct current I1 to the charging voltage, to charge the terminal battery 112.

When the voltage of the charging interface 111 decreases from being greater than or equal to the threshold voltage V0 to being less than the threshold voltage V0, the detection circuit 1133 may send a second indication signal to the controller 1132. In this case, after the controller 1132 receives the second indication signal, it means that the voltage of the charging interface 111 is in a state less than the threshold voltage V0. The controller 1132 may control the conversion circuit 1131 to transmit the second direct current I2 from the terminal battery 112 to the charging interface 111. In addition, the controller 1132 may further control the conversion circuit 1131 to modulate the voltage of the second direct current I2 to the first voltage V1.

It may be understood that, because a voltage change of the charging interface 111 is periodic, the controller 1132 may also periodically control, based on a voltage change period of the charging interface 111, the conversion circuit 1131 to switch the direct current transmission direction. For example, the voltage change period of the charging interface 111 is T, the voltage of the charging interface 111 is greater than or equal to the threshold voltage V0 in a first T/2 time of a period, and the voltage of the charging interface 111 is less than the threshold voltage V0 in a second T/2 time of a period. In this case, the controller 1132 may also control the conversion circuit 1131 to switch the direct current transmission direction based on the period T, control the conversion circuit 1131 to transmit the first direct current I1 from the charging interface 111 to the terminal battery 112 in the first T/2 time of a period, and control the conversion circuit 1131 to transmit the second direct current I1 from the terminal battery 112 to the charging interface 111 in the second T/2 time of a period. In this implementation, the detection circuit 1133 can be omitted, and a structure of the charging circuit 113 is simplified.

### Implementation 2, which is not encompassed by the wording of the claims: unidirectional transmission

In this implementation 2, the charging circuit 113 may modulate the voltage of the first direct current I1 received by the charging interface 111 to a charging voltage, to charge the terminal battery 112. In addition, when the voltage of the charging interface 111 decreases from being greater than or equal to the threshold voltage V0 to being less than the threshold voltage V0, the charging circuit 113 may decrease a charging current provided to the terminal battery 112, to maintain the voltage of the charging interface 111 to be greater than or equal to a lowest operating voltage of the adapter 14.

Specifically, in a case in which an output current of the adapter 14 remains unchanged, when a power of the first direct current output I1 by the adapter 14 decreases, an output voltage of the adapter 14 also decreases, so that the voltage of the charging interface 111 decreases accordingly. In this example of this application, when the voltage of the charging interface 111 is less than the threshold voltage V0, the charging circuit 113 decreases the charging current provided to the terminal battery 112, that is, the output current of the charging circuit 113.

Because an input current and an output current of the charging circuit 113 need to meet a current conversion ratio, when the current conversion ratio remains unchanged, an output current of the charging circuit 113 decreases, and consequently, an output current of the adapter 14 decreases. In addition, because of a conversion relationship between a voltage, a current, and a power, that is, a product of the voltage and the current is equal to the power, the adapter 14 decreases the output current, so that when the output power of the adapter 14 is decreased, the output voltage of the adapter 14 can be maintained to be not excessively decreased, thereby avoiding triggering a protection mechanism in the adapter 14, and enabling the adapter 14 to continuously charge the terminal device 11-2.

Similar to the foregoing implementation 1, in the implementation 2, the charging circuit 113 may also include a conversion circuit 1131 and a controller 1132. A first transmission end of the conversion circuit 1131 is configured to connect to the charging interface 111 of the terminal device 11-2, and the charging interface 111 receives the first direct current I1 provided by the adapter 14. A second transmission end of the conversion circuit 1131 is configured to connect to the terminal battery 112.

The controller 1132 may control the conversion circuit 1131 to modulate the voltage of the first direct current I1 to the charging voltage, to charge the terminal battery 112. For a specific implementation of the process, refer to the foregoing implementation of bidirectional transmission, and details are not described herein again. When the voltage of the charging interface 111 is less than the threshold voltage V0, the controller 1132 may further decrease the charging current provided to the terminal battery 112, to maintain the voltage of the charging interface 112 to be greater than or equal to the lowest operating voltage of the adapter.

The threshold voltage V0 may be greater than the lowest operating voltage of the adapter 14, to avoid that the adapter 14 stops charging the terminal device 11-2 because the output voltage of the adapter 14 is excessively low.

In a possible implementation, the charging circuit 112 may further increase the charging current provided to the terminal battery 11-2 after the voltage of the charging interface 111 increases from being less than the threshold voltage V0 to being greater than or equal to the threshold voltage V0.

Specifically, after the voltage of the charging interface 111 increases from being less than the threshold voltage V0 to being greater than or equal to the threshold voltage V0, it indicates that the power of the first direct current I1 is large. In this case, the charging current provided to the terminal battery 11-2 may be increased, and the voltage value of the first direct current I1 may be appropriately decreased, to improve conversion efficiency of the conversion circuit 1131.

For example, the conversion circuit 1131 may include one or more direct current-direct current conversion circuits. For example, the converter circuit 1131 may include but is not limited to one or more of the following circuits: a linear voltage regulator power supply circuit, a buck conversion circuit, a boost conversion circuit, a buck-boost conversion circuit, a three-level buck conversion circuit, a switched-capacitor conversion circuit, an LLC resonant conversion circuit, a DAB conversion circuit, a forward conversion circuit, a flyback conversion circuit, a half-bridge push-pull circuit, a full-bridge push-pull circuit, a full-bridge phase-shift conversion circuit, and the like. Details are not listed in this embodiment of this application.

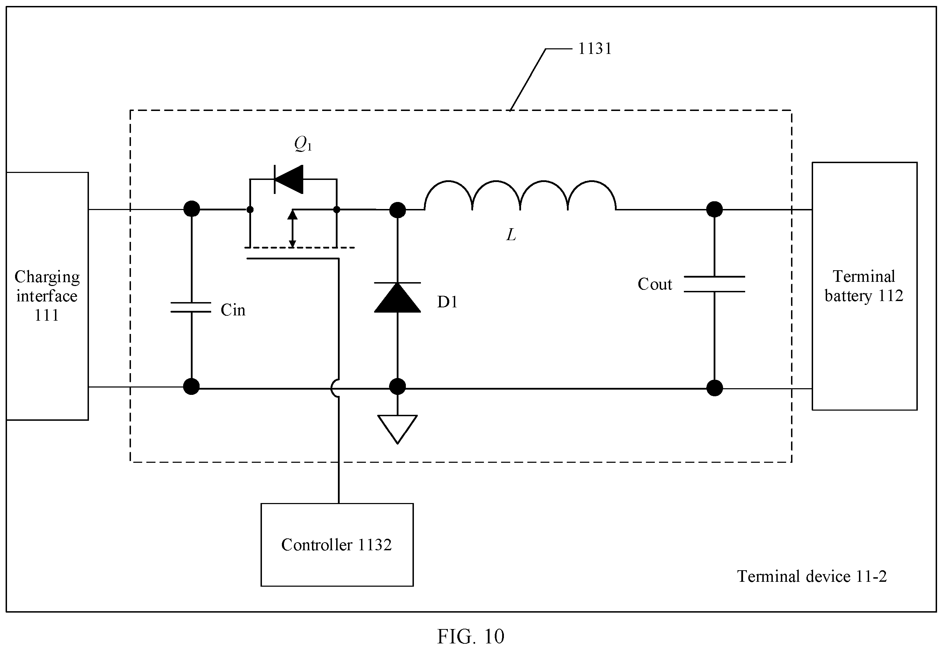

An example in which the conversion circuit 1131 is the buck conversion circuit is used. As shown in FIG. 10, the conversion circuit 1131 mainly includes a switching transistor Q1, an inductor L, a diode D1, an input capacitor Cin, and an output capacitor Cout. A first electrode of the switching transistor Q1 is connected to one end of the input capacitor Cin, and may be used as the first transmission end of the conversion circuit 1131. A second electrode of the switching transistor Q1 is separately connected to a cathode of the diode D1 and one end of the inductor L. The other end of the inductor L is connected to one end of the output capacitor Cout, and may be used as the second transmission end of the conversion circuit 1131. The other end of the input capacitor Cin, an anode of the diode D1, and the other end of the output capacitor Cout are connected with equal potential. A control electrode of the switching transistor Q1 is connected to the controller 1132. The controller 1132 may control the conversion circuit 1131 to modulate the voltage of the first direct current I1 by controlling the switching transistor Q1 to be turned on and off.

In this example of this application, the charging circuit 113 may further include a detection circuit 1133. One end of the detection circuit 1133 is connected to the first transmission end, and the other end of the detection circuit 1133 is connected to the controller 1132. The detection circuit 1133 may detect the voltage of the charging interface 111. In the implementation 2, the voltage of the charging interface 111 is equivalent to the voltage of the first direct current I1.

When the voltage of the charging interface 111 decreases from being greater than or equal to the threshold voltage V0 to being less than the threshold voltage V0, the detection circuit 1133 may send a third indication signal to the controller 1132. After receiving the third indication signal, the controller 1132 may further reduce the output current of the conversion circuit 1131, that is, the charging current provided to the terminal battery 112.

In a possible implementation, when the voltage of the charging interface 111 increases from being less than the threshold voltage V0 to being greater than or equal to the threshold voltage V0, the detection circuit 1133 may further send a fourth indication signal to the controller 1132. After receiving the fourth indication signal, the controller 1132 may further increase the output current of the conversion circuit 1131, that is, the charging current provided to the terminal battery 112.

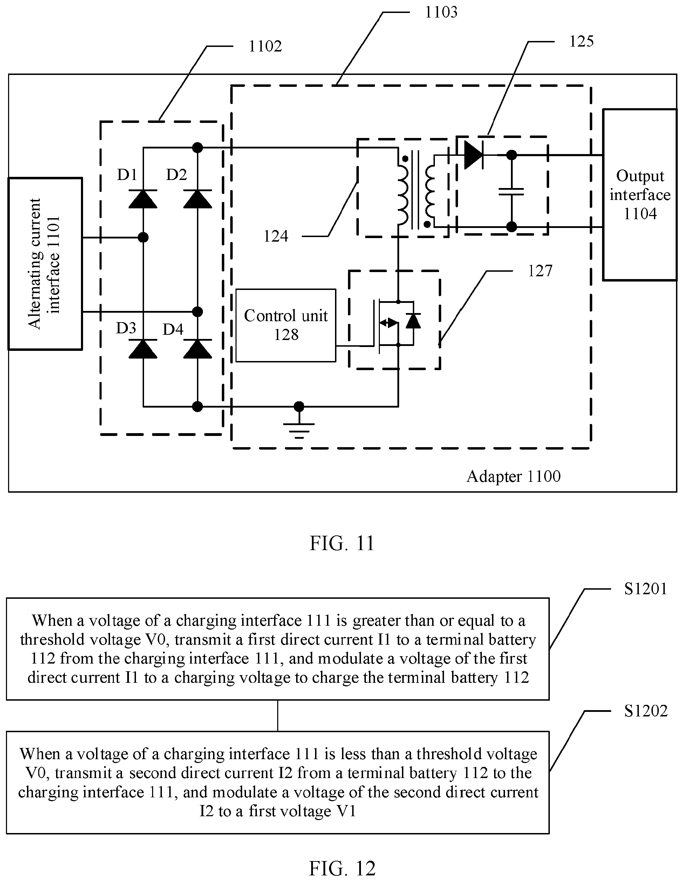

It can be learned from the foregoing descriptions of the terminal device 11-2 that the terminal device 11-2 in this example of this application may be continuously charged by using the adapter 14 having no electrolytic capacitor. For example, an example of this application further provides an adapter 1100 having no electrolytic capacitor shown in FIG. 11. The adapter 1100 may be the adapter 14 in any one of the foregoing embodiments.

Specifically, the adapter 1100 may include an alternating current interface 1101, a first rectifier circuit 1102, a direct-to-direct current converter 1103, and an output interface 1104. An input end of the first rectifier circuit 1101 is connected to the alternating current interface 1101. An output end of the first rectifier circuit 1101 is connected to an input end of the direct current-direct current converter 1102. An output end of the direct current-direct current converter 1102 is connected to the output interface 1104.

The alternating current interface 1101 may receive an alternating current. The first rectifier circuit 1102 may convert the alternating current into the first direct current I1, and then output the first direct current I1 to the direct current-direct current converter 1103. Generally, a voltage of the first direct current I1 output by the first rectifier circuit 1102 is high, so that the first direct current I1 cannot be directly input to the terminal device 11-2. The direct current-direct current converter 1103 may modulate the voltage of the first direct current I1, reduce the voltage of the first direct current I1, and output the modulated first direct current I1 through the output interface 1104.

In this example of this application, the first rectifier circuit 1102 may be an uncontrolled rectifier circuit or a PFC circuit. For example, as shown in FIG. 11, the first rectifier circuit 1102 mainly includes a diode D1, a diode D2, a diode D3, and a diode D4. An anode of the diode D1 is connected to an anode of the diode D2, and may output a fifth direct current I5. A cathode of the diode D1 is connected to an anode of the diode D3, and may be used as an input end of the first rectifier circuit 1102. A cathode of diode D3 is grounded. A cathode of the diode D2 is connected to an anode of the diode D4, and may be used as the other input end of the first rectifier circuit 1102. A cathode of the diode D4 is grounded. The diodes D1 to D4 form a bridge rectifier circuit, to convert an alternating current voltage into the fifth direct current I5.

For example, the direct current-direct current converter 1103 in this example of this application may include a transformer 124, a downstream rectifier circuit 125, a control unit 128, and a switch unit 127. A first electrode of the switch unit 127 is connected to the transformer 124, a second electrode of the switch unit 127 is grounded, and a control electrode of the switch unit 127 is connected to the control unit 128. The switch unit 127 may be turned on and off under control of the control unit 128.

The back-end rectifier circuit 125 may include a rectifier diode and a secondary capacitor, where an anode of the rectifier diode is connected to the transformer 124, a cathode of the rectifier diode is separately connected to one end of the secondary capacitor and the output interface 1104, and the other end of the secondary capacitor is separately connected to the transformer 124 and the output interface 1104. The back-end rectifier circuit 125 may convert the alternating current voltage output by the transformer 124 into the first direct current I1, and output the first direct current I1 through the output interface 1104.

It may be understood that, in a process in which the adapter 14 continuously charges the terminal device 11-2, the control unit 128 may further interact with the terminal device 11-2 through the output interface 126, to obtain current status information of the terminal battery 112. The control unit 128 may further flexibly adjust a control policy for the switch unit 127 based on the current status information of the terminal battery 112, to adjust the output power and/or the output current and/or the output voltage of the adapter 14, thereby further optimizing a charging effect.

Based on a same technical concept, an embodiment of this application further provides a charging method. The charging method may be further applied to the charging circuit 123 shown in FIG. 7. As shown in FIG. 7, the charging circuit 123 is separately connected to a charging interface 121 of a terminal device 12-2 and a terminal battery 122, and the charging interface 121 is configured to receive a first direct current I1 output by an adapter.

For example, in a possible implementation according to the claimed invention, the charging method provided in this embodiment of this application includes the following steps shown in FIG. 12

S1201: When a voltage of the charging interface 121 is greater than or equal to a threshold voltage V0, transmit the first direct current I1 from the charging interface 121 to the terminal battery 122, and modulate a voltage of the first direct current I1 to a charging voltage to charge the terminal battery 122.

S1202. When a voltage of the charging interface 121 is less than a threshold voltage V0, transmit a second direct current I2 from the terminal battery 122 to the charging interface 121, and modulate a voltage of the second direct current I2 to a first voltage V1.

In this embodiment of this application, the first voltage V1 is greater than or equal to a lowest operating voltage of the adapter 124. Therefore, when the voltage of the first direct current I1 output by the adapter 14 is low, the first voltage V1 is applied to the charging interface 121. The first voltage V1 may be equivalent to a voltage of an output interface 126 of the adapter 14. Therefore, according to the charging method provided in this embodiment of this application, the voltage of the output interface 126 of the adapter 14 can be maintained above the lowest operating voltage of the adapter 14, so that the adapter 14 can continuously charge the terminal device 12-2.

In a possible implementation, the threshold voltage V0 is greater than the first voltage V1. In this case, the charging circuit 123 may switch a direct current transmission direction when the voltage of the charging interface 121 is low, to prevent the adapter 14 from stopping working when the voltage of the charging interface 121 (that is, the voltage of the output interface 126) is excessively low and the charging circuit 123 does not switch the direct current transmission direction.

It should be understood that for specific implementations of S1201 and S1202, refer to the actions performed by the charging circuit 123 in the foregoing implementation 1. Details are not described herein again.

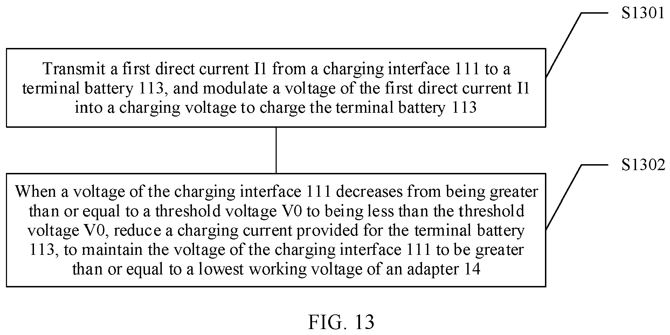

For example, in another possible implementation, the charging method according to an example, which is not encompassed by the wording of the claims, mainly includes the following steps shown in FIG. 13.

S1301: Transmit the first direct current I1 from the charging interface 111 to the terminal battery 113, and modulate a voltage of the first direct current I1 to a charging voltage to charge the terminal battery 113.

S1302: When a voltage of the charging interface 111 decreases from being greater than or equal to a threshold voltage V0 to being less than the threshold voltage V0, decrease a charging current provided to the terminal battery 113, to maintain the voltage of the charging interface 111 to be greater than or equal to a lowest operating voltage of the adapter 14.

In this implementation, the voltage of the charging interface 111 is equivalent to the voltage of the first direct current I1. When the voltage of the charging interface 111 decreases from being greater than or equal to the threshold voltage V0 to being less than the threshold voltage V0, it indicates that the current voltage of the first direct current I1 is too low. The charging circuit 113 decreases a charging current provided to the terminal battery 113, so that an output current of the adapter 14 can be reduced. It can be learned from a correlation relationship between a current, a voltage, and a power that, when a power of the first direct current I1 output by the adapter 14 is reduced, output voltage reduction may be suppressed by reducing the output current, so that the voltage of the output interface 136 may be maintained above the lowest operating voltage of the adapter 14, and the adapter 14 can continuously charge the terminal device 11-2.

In a possible implementation, the threshold voltage V0 is greater than the lowest operating voltage of the adapter 14. In this way, the adapter 14 can be prevented from stopping working because the voltage of the output interface 136 is excessively low.

It should be understood that for specific implementations of S1301 and S1302, refer to the actions performed by the charging circuit 113 in the foregoing implementation 2. Details are not described herein again.

A person skilled in the art should understand that embodiments of this application may be provided as a method, a system, or a computer program product. Therefore, this application may use a form of hardware only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A charging circuit (113), comprising a conversion circuit (1131) and a controller (1132);
a first transmission end of the conversion circuit (1131) is configured to connect to a charging interface (111) of a terminal device (11-2), the charging interface (111) is configured to receive a first direct current (I1) output by an adapter (14), and a second transmission end of the conversion circuit (1131) is configured to connect to a terminal battery (112);
the conversion circuit (1131) is configured to:
when a voltage of the charging interface (111) is greater than or equal to a threshold voltage, transmit the first direct current (I1) to the terminal battery (112) from the charging interface (111); and
the controller (1132) is configured to:
when the voltage of the charging interface (111) is greater than or equal to the threshold voltage, control the conversion circuit (1131) to modulate a voltage of the first direct current (I2) to a charging voltage to charge the terminal battery (112);
**characterised in that**
the conversion circuit (1131) is further configured to:
when the voltage of the charging interface (111) is less than the threshold voltage, transmit a second direct current (I2) from the terminal battery (112) to the charging interface (111); and
that the controller (1132) is further configured to:
when the voltage of the charging interface (111) is less than the threshold voltage, control the conversion circuit (1131) to modulate a voltage of the second direct current (I2) to a first voltage, wherein the first voltage is greater than or equal to a lowest operating voltage of the adapter (14).

2. The charging circuit (113) according to claim 1, wherein the charging circuit (113) further comprises a detection circuit (1133), one end of the detection circuit (1133) is configured to connect to the charging interface (111), and the other end of the detection circuit (1133) is connected to the controller (1132);
the detection circuit (1133) is configured to:
detect the voltage of the charging interface (111);
when the voltage of the charging interface (111) increases from being less than the threshold voltage to being greater than or equal to the threshold voltage, send a first indication signal to the controller (1132); or
when the voltage of the charging interface (111) decreases from being greater than or equal to the threshold voltage to being less than the threshold voltage, send a second indication signal to the controller (1132); and
the controller (1132) is specifically configured to:
after receiving the first indication signal, control the conversion circuit (1131) to modulate the voltage of the first direct current (I1) to the charging voltage to charge the terminal battery (112); or
after receiving the second indication signal, control the conversion circuit (1131) to modulate the voltage of the second direct current (I2) to the first voltage.

3. The charging circuit (113) according to claim 1 or 2, wherein the conversion circuit (1131) comprises one or more direct current-direct current conversion circuits.

4. The charging circuit (113) according to any one of claims 1 to 3, wherein the conversion circuit (1131) comprises at least one of the following circuits:
a linear voltage regulator power supply circuit, a buck buck conversion circuit, a boost boost conversion circuit, a buck-boost buck-boost conversion circuit, a three-level buck buck conversion circuit, a switched-capacitor conversion circuit, an inductor-inductor-capacitor LLC resonant conversion circuit, a dual active full-bridge direct current-direct current DAB conversion circuit, a forward conversion circuit, a flyback conversion circuit, a half-bridge push-pull circuit, a full-bridge push-pull circuit, and a full-bridge phase-shift conversion circuit.

5. A terminal device (11-2), comprising a charging interface (111), a charging circuit (113), and a terminal battery (112), wherein the charging circuit (113) is separately connected to the charging interface (111) and the terminal battery (112);
the charging interface (111) is configured to receive a first direct current (I1) output by an adapter (14); and
the charging circuit (113) is configured to:
when a voltage of the charging interface (111) is greater than or equal to a threshold voltage, transmit the first direct current (I1) to the terminal battery (112) from the charging interface (111), and modulate a voltage of the first direct current (I1) to a charging voltage to charge the terminal battery (112);
**characterised in that**
the charging circuit (113) is further configured to:
when the voltage of the charging interface (111) is less than the threshold voltage, transmit a second direct current (I2) from the terminal battery (112) to the charging interface (111), and modulate a voltage of the second direct current (I2) to a first voltage, wherein the first voltage is greater than or equal to a lowest operating voltage of the adapter (14).

6. The terminal device (11-2) according to claim 5, wherein the charging circuit (113) comprises a conversion circuit (1131) and a controller (1132), a first transmission end of the conversion circuit (1131) is configured to connect to the charging interface (111) of the terminal device (11-2), and a second transmission end of the conversion circuit (1131) is configured to connect to the terminal battery (112);
the conversion circuit (1131) is configured to:
when the voltage of the charging interface (111) is greater than or equal to the threshold voltage, transmit the first direct current (I1) to the terminal battery (112) from the charging interface (111); or
when the voltage of the charging interface (111) is less than the threshold voltage, transmit the second direct current (I2) from the terminal battery (112) to the charging interface (111); and
the controller (1132) is configured to:
when the voltage of the charging interface (111) is greater than or equal to the threshold voltage, control the conversion circuit (1131) to modulate the voltage of the first direct current (I1) to the charging voltage; or
when the voltage of the charging interface (111) is less than the threshold voltage, control the conversion circuit (1131) to modulate the voltage of the second direct current (I2) to the first voltage.

7. The terminal device (11-2) according to claim 6, wherein the charging circuit (113) further comprises a detection circuit (1133), one end of the detection circuit (1133) is configured to connect to the charging interface (111), and the other end of the detection circuit (1133) is connected to the controller (1132);
the detection circuit (1133) is configured to:
detect the voltage of the charging interface (111);
when the voltage of the charging interface (111) increases from being less than the threshold voltage to being greater than or equal to the threshold voltage, send a first indication signal to the controller (1132); or
when the voltage of the charging interface (111) decreases from being greater than or equal to the threshold voltage to being less than the threshold voltage, send a second indication signal to the controller (1132); and
the controller (1132) is specifically configured to:
after receiving the first indication signal, control the conversion circuit (1131) to modulate the voltage of the first direct current (I1) to the charging voltage; or
after receiving the second indication signal, control the conversion circuit (1131) to modulate the voltage of the second direct current (I2) to the first voltage.

8. The terminal device (11-2) according to claim 6 or 7, wherein the conversion circuit (1131) comprises one or more direct current-direct current conversion circuits.

9. The terminal device (11-2) according to any one of claims 6 to 8, wherein the conversion circuit (1131) comprises at least one of the following circuits:
a linear voltage regulator power supply circuit, a buck buck conversion circuit, a boost boost conversion circuit, a buck-boost buck-boost conversion circuit, a three-level buck buck conversion circuit, a switched-capacitor conversion circuit, an inductor-inductor-capacitor LLC resonant conversion circuit, a dual active full-bridge direct current-direct current DAB conversion circuit, a forward conversion circuit, a flyback conversion circuit, a half-bridge push-pull circuit, a full-bridge push-pull circuit, and a full-bridge phase-shift conversion circuit.

10. A charging system, comprising the terminal device (11-2) according to any one of claims 5 to 9 and an adapter (14), wherein the adapter (14) comprises an alternating current interface, a first rectifier circuit, a direct current-direct current converter, and an output interface, an input end of the first rectifier circuit is connected to the alternating current interface, an output end of the first rectifier circuit is connected to an input end of the direct current-direct current converter, and an output end of the direct current-direct current converter is connected to the output interface;
the alternating current interface is configured to receive an alternating current;
the first rectifier circuit is configured to: after converting the alternating current into a first direct current, output the first direct current to the direct current-direct current converter; and
the direct current-direct current converter is configured to: after modulating a voltage of the first direct current, output the first direct current through the output interface; and wherein the output interface of the adapter (14) is coupled to a charging interface of the terminal device (11-2).

11. The charging system according to claim 10, wherein the first rectifier circuit is a non-controlled rectifier circuit or a PFC circuit.

12. The charging system according to claim 10 or 11, wherein the first direct current is a pulsating direct current.

13. A charging method, applied to the charging circuit (113) according to any one of claims 1 to 4, wherein the charging circuit (113) is separately connected to a charging interface (111) of a terminal device (11-2) and a terminal battery (112), the charging interface (111) is configured to receive a first direct current (I1) output by an adapter (14), and the method comprises:
when a voltage of the charging interface (111) is greater than or equal to a threshold voltage, transmitting the first direct current (I1) to the terminal battery (112) from the charging interface (111), and modulating a voltage of the first direct current (I1) to a charging voltage to charge the terminal battery (112);
**characterised by**
when the voltage of the charging interface (111) is less than the threshold voltage, transmitting a second direct current (I2) from the terminal battery (112) to the charging interface (111), and modulating a voltage of the second direct current (I2) to a first voltage, wherein the first voltage is greater than or equal to a lowest operating voltage of the adapter (14).

## Patentansprüche

1. Ladeschaltung (113), umfassend eine Umwandlungsschaltung (1131) und eine Steuerung (1132);
wobei ein erstes Übertragungsende der Umwandlungsschaltung (1131) dazu konfiguriert ist, sich mit einer Ladeschnittstelle (111) einer Endgerätevorrichtung (11-2) zu verbinden, wobei die Ladeschnittstelle (111) dazu konfiguriert ist, einen ersten Gleichstrom (I1) zu empfangen, der von einem Adapter (14) ausgegeben wird, und ein zweites Übertragungsende der Umwandlungsschaltung (1131) dazu konfiguriert ist, sich mit einer Endgerätebatterie (112) zu verbinden;
wobei die Umwandlungsschaltung (1131) zu Folgendem konfiguriert ist:
wenn eine Spannung der Ladeschnittstelle (111) größer als oder gleich einer Schwellenspannung ist, Übertragen des ersten Gleichstroms (I1) von der Ladeschnittstelle (111) an die Endgerätebatterie (112); und
wobei die Steuerung (1132) zu Folgendem konfiguriert ist:
wenn die Spannung der Ladeschnittstelle (111) größer als oder gleich der Schwellenspannung ist, Steuern der Umwandlungsschaltung (1131), um eine Spannung des ersten Gleichstroms (I2) auf eine Ladespannung zu modulieren, um die Endgerätebatterie (112) zu laden;
**dadurch gekennzeichnet, dass**
die Umwandlungsschaltung (1131) ferner zu Folgendem konfiguriert ist:
wenn die Spannung der Ladeschnittstelle (111) kleiner als die Schwellenspannung ist, Übertragen eines zweiten Gleichstroms (I2) von der Endgerätebatterie (112) an die Ladeschnittstelle (111); und
die Steuerung (1132) ferner zu Folgendem konfiguriert ist:
wenn die Spannung der Ladeschnittstelle (111) kleiner als die Schwellenspannung ist, Steuern der Umwandlungsschaltung (1131), um eine Spannung des zweiten Gleichstroms (I2) auf eine erste Spannung zu modulieren, wobei die erste Spannung größer als oder gleich einer niedrigsten Betriebsspannung des Adapters (14) ist.

2. Ladeschaltung (113) nach Anspruch 1, wobei die Ladeschaltung (113) ferner eine Erkennungsschaltung (1133) umfasst, wobei ein Ende der Erkennungsschaltung (1133) dazu konfiguriert ist, sich mit der Ladeschnittstelle (111) zu verbinden, und das andere Ende der Erkennungsschaltung (1133) mit der Steuerung (1132) verbunden ist;
wobei die Erkennungsschaltung (1133) zu Folgendem konfiguriert ist:
Erkennen der Spannung der Ladeschnittstelle (111);
wenn die Spannung der Ladeschnittstelle (111) von weniger als der Schwellenspannung auf größer als oder gleich der Schwellenspannung ansteigt, Senden eines ersten Anzeigesignal an die Steuerung (1132); oder
wenn die Spannung der Ladeschnittstelle (111) von größer als oder gleich der Schwellenspannung auf weniger als die Schwellenspannung sinkt, Senden eines zweiten Anzeigesignal an die Steuerung (1132); und
wobei die Steuerung (1132) speziell zu Folgendem konfiguriert ist:
nach Empfangen des ersten Anzeigesignals, Steuern der Umwandlungsschaltung (1131), um die Spannung des ersten Gleichstroms (I1) auf die Ladespannung zu modulieren, um die Endgerätebatterie (112) zu laden; oder
nach Empfangen des zweiten Anzeigesignals, Steuern der Umwandlungsschaltung (1131), um die Spannung des zweiten Gleichstroms (I2) auf die erste Spannung zu modulieren.

3. Ladeschaltung (113) nach Anspruch 1 oder 2, wobei die Umwandlungsschaltung (1131) eine oder mehrere Gleichstrom-Gleichstrom-Umwandlungsschaltungen umfasst.

4. Ladeschaltung (113) nach einem der Ansprüche 1 bis **3,** wobei die Umwandlungsschaltung (1131) mindestens eine der folgenden Schaltungen umfasst:
eine lineare Spannungsregler-Stromversorgungsschaltung, eine Abwärts-Abwärts-Umwandlungsschaltung, eine Aufwärts-Aufwärts-Umwandlungsschaltung, eine Abwärts-Aufwärts-Abwärts-Aufwärts-Umwandlungsschaltung, eine Abwärts-Abwärts-Umwandlungsschaltung mit drei Pegeln, eine Schaltkondensator-Umwandlungsschaltung, eine Induktor-Induktor-Kondensator-LLC-Resonanz-Umwandlungsschaltung, eine duale aktive Vollbrücken-Gleichstrom-Gleichstrom-DAB-Umwandlungsschaltung, eine Vorwärts-Umwandlungsschaltung, eine Rücklauf-Umwandlungsschaltung, eine Halbbrücken-Gegentaktschaltung, eine Vollbrücken-Gegentaktschaltung und eine Vollbrücken-Phasenverschiebungs-Umwandlungsschaltung.

5. Endgerätevorrichtung (11-2), die eine Ladeschnittstelle (111), eine Ladeschaltung (113) und eine Endgerätebatterie (112) umfasst, wobei die Ladeschaltung (113) separat mit der Ladeschnittstelle (111) und der Endgerätebatterie (112) verbunden ist;
die Ladeschnittstelle (111) dazu konfiguriert ist, einen ersten Gleichstrom (I1) zu empfangen, der von einem Adapter (14) ausgegeben wird; und
die Ladeschaltung (113) zu Folgendem konfiguriert ist:
wenn eine Spannung der Ladeschnittstelle (111) größer als oder gleich einer Schwellenspannung ist, Übertragen des ersten Gleichstroms (I1) von der Ladeschnittstelle (111) an die Endgerätebatterie (112) und Modulieren einer Spannung des ersten Gleichstroms (I1) auf eine Ladespannung, um die Endgerätebatterie (112) zu laden;
**dadurch gekennzeichnet, dass**
die Ladeschaltung (113) ferner zu Folgendem konfiguriert ist:
wenn die Spannung der Ladeschnittstelle (111) kleiner als die Schwellenspannung ist, Übertragen eines zweiten Gleichstroms (I2) von der Endgerätebatterie (112) an die Ladeschnittstelle (111) und Modulieren einer Spannung des zweiten Gleichstroms (I2) auf eine erste Spannung, wobei die erste Spannung größer als oder gleich einer niedrigsten Betriebsspannung des Adapters (14) ist.

6. Endgerätevorrichtung (11-2) nach Anspruch 5, wobei die Ladeschaltung (113) eine Umwandlungsschaltung (1131) und eine Steuerung (1132) umfasst, ein erstes Übertragungsende der Umwandlungsschaltung (1131) dazu konfiguriert ist, sich mit der Ladeschnittstelle (111) der Endgerätevorrichtung (11-2) zu verbinden, und ein zweites Übertragungsende der Umwandlungsschaltung (1131) dazu konfiguriert ist, sich mit der Endgerätebatterie (112) zu verbinden;
wobei die Umwandlungsschaltung (1131) zu Folgendem konfiguriert ist:
wenn die Spannung der Ladeschnittstelle (111) größer als oder gleich der Schwellenspannung ist, Übertragen des ersten Gleichstroms (I1) von der Ladeschnittstelle (111) an die Endgerätebatterie (112); oder
wenn die Spannung der Ladeschnittstelle (111) kleiner als die Schwellenspannung ist, Übertragen des zweiten Gleichstroms (I2) von der Endgerätebatterie (112) an die Ladeschnittstelle (111); und
wobei die Steuerung (1132) zu Folgendem konfiguriert ist:
wenn die Spannung der Ladeschnittstelle (111) größer als oder gleich der Schwellenspannung ist, Steuern der Umwandlungsschaltung (1131), um die Spannung des ersten Gleichstroms (I1) auf die Ladespannung zu modulieren; oder
wenn die Spannung der Ladeschnittstelle (111) kleiner als die Schwellenspannung ist, Steuern der Umwandlungsschaltung (1131), um die Spannung des zweiten Gleichstroms (I2) auf die erste Spannung zu modulieren.

7. Endgerätevorrichtung (11-2) nach Anspruch 6, wobei die Ladeschaltung (113) ferner eine Erkennungsschaltung (1133) umfasst, wobei ein Ende der Erkennungsschaltung (1133) dazu konfiguriert ist, sich mit der Ladeschnittstelle (111) zu verbinden, und das andere Ende der Erkennungsschaltung (1133) mit der Steuerung (1132) verbunden ist;
wobei die Erkennungsschaltung (1133) zu Folgendem konfiguriert ist:
Erkennen der Spannung der Ladeschnittstelle (111);
wenn die Spannung der Ladeschnittstelle (111) von weniger als der Schwellenspannung auf größer als oder gleich der Schwellenspannung ansteigt, Senden eines ersten Anzeigesignal an die Steuerung (1132); oder
wenn die Spannung der Ladeschnittstelle (111) von größer als oder gleich der Schwellenspannung auf weniger als die Schwellenspannung sinkt, Senden eines zweiten Anzeigesignal an die Steuerung (1132); und
wobei die Steuerung (1132) speziell zu Folgendem konfiguriert ist:
nach Empfangen des ersten Anzeigesignals, Steuern der Umwandlungsschaltung (1131), um die Spannung des ersten Gleichstroms (I1) auf die Ladespannung zu modulieren; oder
nach Empfangen des zweiten Anzeigesignals, Steuern der Umwandlungsschaltung (1131), um die Spannung des zweiten Gleichstroms (I2) auf die erste Spannung zu modulieren.

8. Endgerätevorrichtung (11-2) nach Anspruch 6 oder 7, wobei die Umwandlungsschaltung (1131) eine oder mehrere Gleichstrom-Gleichstrom-Umwandlungsschaltungen umfasst.

9. Endgerätevorrichtung (11-2) nach einem der Ansprüche 6 bis 8, wobei die Umwandlungsschaltung (1131) mindestens eine der folgenden Schaltungen umfasst:
eine lineare Spannungsregler-Stromversorgungsschaltung, eine Abwärts-Abwärts-Umwandlungsschaltung, eine Aufwärts-Aufwärts-Umwandlungsschaltung, eine Abwärts-Aufwärts-Abwärts-Aufwärts-Umwandlungsschaltung, eine Abwärts-Abwärts-Umwandlungsschaltung mit drei Pegeln, eine Schaltkondensator-Umwandlungsschaltung, eine Induktor-Induktor-Kondensator-LLC-Resonanz-Umwandlungsschaltung, eine duale aktive Vollbrücken-Gleichstrom-Gleichstrom-DAB-Umwandlungsschaltung, eine Vorwärts-Umwandlungsschaltung, eine Rücklauf-Umwandlungsschaltung, eine Halbbrücken-Gegentaktschaltung, eine Vollbrücken-Gegentaktschaltung und eine Vollbrücken-Phasenverschiebungs-Umwandlungsschaltung.

10. Ladesystem, umfassend die Endgerätevorrichtung (11-2) nach einem der Ansprüche 5 bis 9 und einen Adapter (14), wobei der Adapter (14) eine Wechselstromschnittstelle, eine erste Gleichrichterschaltung, einen Gleichstrom-Gleichstrom-Wandler und eine Ausgangsschnittstelle umfasst, ein Eingangsende der ersten Gleichrichterschaltung mit der Wechselstromschnittstelle verbunden ist, ein Ausgangsende der ersten Gleichrichterschaltung mit einem Eingangsende des Gleichstrom-Gleichstrom-Wandlers verbunden ist und ein Ausgangsende des Gleichstrom-Gleichstrom-Wandlers mit der Ausgangsschnittstelle verbunden ist;
die Wechselstromschnittstelle dazu konfiguriert ist, einen Wechselstrom zu empfangen;
die erste Gleichrichterschaltung zu Folgendem konfiguriert ist:
nach Umwandeln des Wechselstroms in einen ersten Gleichstrom, Ausgeben des ersten Gleichstroms an den Gleichstrom-Gleichstrom-Wandler; und
der Gleichstrom-Gleichstrom-Wandler zu Folgendem konfiguriert ist: nach Modulieren einer Spannung des ersten Gleichstroms, Ausgeben des ersten Gleichstroms über die Ausgangsschnittstelle; und wobei die Ausgangsschnittstelle des Adapters (14) mit einer Ladeschnittstelle der Endgerätevorrichtung (11-2) gekoppelt ist.

11. Ladesystem nach Anspruch 10, wobei die erste Gleichrichterschaltung eine ungesteuerte Gleichrichterschaltung oder eine PFC-Schaltung ist.

12. Ladesystem nach Anspruch 10 oder 11, wobei der erste Gleichstrom ein pulsierender Gleichstrom ist.

13. Ladeverfahren, angewandt auf die Ladeschaltung (113) nach einem der Ansprüche 1 bis 4, wobei die Ladeschaltung (113) separat mit einer Ladeschnittstelle (111) einer Endgerätevorrichtung (11-2) und einer Endgerätebatterie (112) verbunden ist, die Ladeschnittstelle (111) dazu konfiguriert ist, einen ersten Gleichstrom (I1) zu empfangen, der von einem Adapter (14) ausgegeben wird, und das Verfahren Folgendes umfasst:
wenn eine Spannung der Ladeschnittstelle (111) größer als oder gleich einer Schwellenspannung ist, Übertragen des ersten Gleichstroms (I1) von der Ladeschnittstelle (111) an die Endgerätebatterie (112) und Modulieren einer Spannung des ersten Gleichstroms (I1) auf eine Ladespannung, um die Endgerätebatterie (112) zu laden;
**gekennzeichnet durch**
wenn die Spannung der Ladeschnittstelle (111) kleiner als die Schwellenspannung ist, Übertragen eines zweiten Gleichstroms (I2) von der Endgerätebatterie (112) an die Ladeschnittstelle (111) und Modulieren einer Spannung des zweiten Gleichstroms (I2) auf eine erste Spannung, wobei die erste Spannung größer als oder gleich einer niedrigsten Betriebsspannung des Adapters (14) ist.

## Revendications

1. Circuit de charge (113), comprenant un circuit de conversion (1131) et un dispositif de commande (1132) ;
une première extrémité de transmission du circuit de conversion (1131) est configurée pour se connecter à une interface de charge (111) d'un dispositif terminal (11-2), **l'interface** de charge (111) est configurée pour recevoir un premier courant continu (I1) délivré par un adaptateur (14), et une seconde extrémité de transmission du circuit de conversion (1131) est configurée pour se connecter à une batterie terminale (112) ;
le circuit de conversion (1131) est configuré pour :
lorsqu'une tension de l'interface de charge (111) est supérieure ou égale à une tension seuil, transmettre le premier courant continu (I1) à la batterie terminale (112) depuis **l'interface** de charge (111) ; et
le dispositif de commande (1132) est configuré pour :
lorsque la tension de l'interface de charge (111) est supérieure ou égale à la tension seuil, commander le circuit de conversion (1131) pour moduler une tension du premier courant continu (I2) en une tension de charge pour charger la batterie terminale (112) ;
**caractérisé en ce que**
le circuit de conversion (1131) est également configuré pour :
lorsque la tension de l'interface de charge (111) est inférieure à la tension seuil, transmettre un second courant continu (I2) de la batterie terminale (112) à l'interface de charge (111) ; et
**en ce que** le dispositif de commande (1132) est également configuré pour :
lorsque la tension de l'interface de charge (111) est inférieure à la tension seuil, commander le circuit de conversion (1131) pour moduler une tension du second courant continu (I2) à une première tension, dans lequel la première tension est supérieure ou égale à une tension de fonctionnement la plus basse de l'adaptateur (14).

2. Circuit de charge (113) selon la revendication **1,** dans lequel le circuit de charge (113) comprend également un circuit de détection (1133), une extrémité du circuit de détection (1133) est configurée pour se connecter à l'interface de charge (111), et l'autre extrémité du circuit de détection (1133) est connectée au dispositif de commande (1132) ;
le circuit de détection (1133) est configuré pour :
détecter la tension de l'interface de charge (111) ;
lorsque la tension de l'interface de charge (111) augmente d'une valeur inférieure à la tension seuil à une valeur supérieure ou égale à la tension seuil, envoyer un premier signal d'indication au dispositif de commande (1132) ; ou
lorsque la tension de l'interface de charge (111) baisse d'une valeur supérieure ou égale à la tension seuil à une valeur inférieure à la tension seuil, envoyer un second signal d'indication au dispositif de commande (1132) ; et
le dispositif de commande (1132) est spécifiquement configuré pour :
après avoir reçu le premier signal d'indication, commander le circuit de conversion (1131) pour moduler la tension du premier courant continu (I1) à la tension de charge pour charger la batterie terminale (112) ; ou
après avoir reçu le second signal **d'indication,** commander le circuit de conversion (1131) pour moduler la tension du second courant continu (I2) à la première tension.

3. Circuit de charge (113) selon la revendication 1 ou **2,** dans lequel le circuit de conversion (1131) comprend un ou plusieurs circuits de conversion courant continu-courant continu.

4. Circuit de charge (113) selon l'une quelconque des revendications 1 à **3,** dans lequel le circuit de conversion (1131) comprend au moins l'un des circuits suivants :
un circuit d'alimentation de régulateur de tension linéaire, un circuit de conversion abaisseur-abaisseur, un circuit de conversion élévateur-élévateur, un circuit de conversion abaisseur-élévateur abaisseur-élévateur, un circuit de conversion abaisseur-abaisseur à trois niveaux, un circuit de conversion à condensateur commuté, un circuit de conversion résonnant inductance-inductance-condensateur LLC, un circuit de conversion à double pont complet actif courant continu-courant continu **DAB,** un circuit de conversion directe, un circuit de conversion à transfert direct, un circuit push-pull en demi-pont, un circuit push-pull en pont complet et un circuit de conversion à déphasage en pont complet.

5. Dispositif terminal (11-2), comprenant une interface de charge (111), un circuit de charge (113) et une batterie terminale (112), dans lequel le circuit de charge (113) est connecté séparément à l'interface de charge (111) et à la batterie terminale (112) ;
l'interface de charge (111) est configurée pour recevoir un premier courant continu (I1) délivré par un adaptateur (14) ; et
le circuit de charge (113) est configuré pour :
lorsqu'une tension de l'interface de charge (111) est supérieure ou égale à une tension seuil, transmettre le premier courant continu (I1) à la batterie terminale (112) depuis l'interface de charge (111), et moduler une tension du premier courant continu (I1) à une tension de charge pour charger la batterie terminale (112) ;
**caractérisé en ce que**
le circuit de charge (113) est également configuré pour :
lorsque la tension de l'interface de charge (111) est inférieure à la tension seuil, transmettre un second courant continu (I2) de la batterie terminale (112) à l'interface de charge (111), et moduler une tension du second courant continu (I2) à une première tension, dans lequel la première tension est supérieure ou égale à une tension de fonctionnement la plus basse de l'adaptateur (14).

6. Dispositif terminal (11-2) selon la revendication 5, dans lequel le circuit de charge (113) comprend un circuit de conversion (1131) et un dispositif de commande (1132), une première extrémité de transmission du circuit de conversion (1131) est configurée pour se connecter à l'interface de charge (111) du dispositif terminal (11-2), et une seconde extrémité de transmission du circuit de conversion (1131) est configurée pour se connecter à la batterie du terminal (112) ;
le circuit de conversion (1131) est configuré pour :
lorsque la tension de l'interface de charge (111) est supérieure ou égale à la tension seuil, transmettre le premier courant continu (I1) à la batterie terminale (112) depuis l'interface de charge (111) ; ou
lorsque la tension de l'interface de charge (111) est inférieure à la tension seuil, transmettre le second courant continu (I2) de la batterie terminale (112) à l'interface de charge (111) ; et
le dispositif de commande (1132) est configuré pour :
lorsque la tension de l'interface de charge (111) est supérieure ou égale à la tension seuil, commander le circuit de conversion (1131) pour moduler la tension du premier courant continu (I1) à la tension de charge ; ou
lorsque la tension de l'interface de charge (111) est inférieure à la tension seuil, commander le circuit de conversion (1131) pour moduler la tension du second courant continu (I2) à la première tension.

7. Dispositif terminal (11-2) selon la revendication **6,** dans lequel le circuit de charge (113) comprend également un circuit de détection (1133), une extrémité du circuit de détection (1133) est configurée pour se connecter à l'interface de charge (111), et l'autre extrémité du circuit de détection (1133) est connectée au dispositif de commande (1132) ;
le circuit de détection (1133) est configuré pour :
détecter la tension de l'interface de charge (111) ;
lorsque la tension de l'interface de charge (111) augmente d'une valeur inférieure à la tension seuil à une valeur supérieure ou égale à la tension seuil, envoyer un premier signal d'indication au dispositif de commande (1132) ; ou
lorsque la tension de l'interface de charge (111) baisse d'une valeur supérieure ou égale à la tension seuil à une valeur inférieure à la tension seuil, envoyer un second signal d'indication au dispositif de commande (1132) ; et
le dispositif de commande (1132) est spécifiquement configuré pour :
après avoir reçu le premier signal d'indication, commander le circuit de conversion (1131) pour moduler la tension du premier courant continu (I1) à la tension de charge ; ou
après avoir reçu le second signal **d'indication,** commander le circuit de conversion (1131) pour moduler la tension du second courant continu (I2) à la première tension.

8. Dispositif terminal (11-2) selon la revendication 6 ou 7, dans lequel le circuit de conversion (1131) comprend un ou plusieurs circuits de conversion courant continu-courant continu.

9. Dispositif terminal (11-2) selon l'une quelconque des revendications 6 à 8, dans lequel le circuit de conversion (1131) comprend au moins l'un des circuits suivants :
un circuit d'alimentation de régulateur de tension linéaire, un circuit de conversion abaisseur-abaisseur, un circuit de conversion boost-boost, un circuit de conversion abaisseur-élévateur abaisseur-élévateur, un circuit de conversion abaisseur-abaisseur à trois niveaux, un circuit de conversion à condensateur commuté, un circuit de conversion résonnant inductanceinductance-condensateur LLC, un circuit de conversion à double pont complet actif courant continu-courant continu DAB, un circuit de conversion directe, un circuit de conversion à transfert direct, un circuit push-pull en demi-pont, un circuit push-pull en pont complet et un circuit de conversion à déphasage en pont complet.

10. Système de charge, comprenant le dispositif terminal (11-2) selon l'une quelconque des revendications 5 à 9 et un adaptateur (14), dans lequel l'adaptateur (14) comprend une interface de courant alternatif, un premier circuit redresseur, un convertisseur courant continu-courant continu et une interface de sortie, une extrémité d'entrée du premier circuit redresseur est connectée à l'interface de courant alternatif, une extrémité de sortie du premier circuit redresseur est connectée à une extrémité d'entrée du convertisseur courant continu-courant continu et une extrémité de sortie du convertisseur courant continu-courant continu est connectée à l'interface de sortie ;
l'interface de courant alternatif est configurée pour recevoir un courant alternatif ;
le premier circuit redresseur est configuré pour : après avoir converti le courant alternatif en un premier courant continu, délivrer le premier courant continu au convertisseur courant continu-courant continu ; et
le convertisseur courant continu-courant continu est configuré pour : après avoir modulé une tension du premier courant continu, délivrer le premier courant continu à travers l'interface de sortie ; et dans lequel l'interface de sortie de l'adaptateur (14) est couplée à une interface de charge du dispositif terminal (11-2) .

11. Système de charge selon la revendication 10, dans lequel le premier circuit redresseur est un circuit redresseur non commandé ou un circuit PFC.

12. Système de charge selon la revendication 10 ou 11, dans lequel le premier courant continu est un courant continu pulsé.

13. Procédé de charge, appliqué au circuit de charge (113) selon l'une quelconque des revendications 1 à 4, dans lequel le circuit de charge (113) est connecté séparément à une interface de charge (111) d'un dispositif terminal (11-2) et à une batterie terminale (112), l'interface de charge (111) est configurée pour recevoir un premier courant continu (I1) délivré par un adaptateur (14), et le procédé comprend :
lorsqu'une tension de l'interface de charge (111) est supérieure ou égale à une tension seuil, la transmission du premier courant continu (I1) à la batterie terminale (112) depuis l'interface de charge (111), et la modulation d'une tension du premier courant continu (I1) à une tension de charge pour charger la batterie terminale (112) ;
**caractérisé par**
lorsque la tension de l'interface de charge (111) est inférieure à la tension seuil, la transmission d'un second courant continu (I2) de la batterie terminale (112) à l'interface de charge (111), et la modulation d'une tension du second courant continu (I2) à une première tension, dans lequel la première tension est supérieure ou égale à une tension de fonctionnement la plus basse de l'adaptateur (14).
